(19) Europäisches Patentamt / European Patent Office / Office européen des brevets

(11) **EP 1 319 292 B1**

(12) **FASCICULE DE BREVET EUROPEEN**

(45) Date de publication et mention de la délivrance du brevet:
**13.05.2015 Bulletin 2015/20**

(21) Numéro de dépôt: **01972177.8**

(22) Date de dépôt: **20.09.2001**

(51) Int Cl.:
***H04L 27/26*** *(2006.01)*

(86) Numéro de dépôt international:
**PCT/FR2001/002935**

(87) Numéro de publication internationale:
**WO 2002/025883 (28.03.2002 Gazette 2002/12)**

(54) **SIGNAL MULTIPORTEUSE A SYMBOLE DE REFERENCE CONCU POUR LIMITER L'INTERFERENCE INTERSYMBOLES**

MEHRTRÄGERSIGNAL MIT ZUR VERMINDERUNG VON INTERSYMBOLINTERFERENZ KONZIPIERTEM REFERENZSIGNAL

REFERENCE SYMBOL MULTICARRIER SIGNAL DESIGNED FOR LIMITING INTERSYMBOL INTERFERENCE

(84) Etats contractants désignés:
**AT BE CH CY DE DK ES FI FR GB GR IE IT LI LU MC NL PT SE TR**

(30) Priorité: **20.09.2000 FR 0011998**

(43) Date de publication de la demande:
**18.06.2003 Bulletin 2003/25**

(73) Titulaires:
• **Orange**
  **75015 Paris (FR)**
• **TDF**
  **75015 Paris (FR)**

(72) Inventeurs:
• **GONZALEZ, Alberto**
  **F-35700 RENNES (FR)**
• **LACROIX-PENTHER, Dominique**
  **F-35700 RENNES (FR)**

(74) Mandataire: **Vidon Brevets & Stratégie**
**16B, rue de Jouanet**
**BP 90333**
**35703 Rennes Cedex 7 (FR)**

(56) Documents cités:
**EP-A- 0 734 132     WO-A-95/07581**

• **AIPING HUANG, YUPING ZHAO: "Estimating channel respnse from pilot subcarrier pairs for OFDM systems" MIDWEST SYMPOSIUM ON CIRCUITS AND SYSTEMS, 3 août 1997 (1997-08-03), pages 774-777, XP000789269 New York, US ISBN: 0-7803-3695-X**
• **HIROSAKI: "An analysis of automatic equalizers for orthogonally multiplexed QAMs ystems" IEEE TRANSACTIONS ON COMMUNICATIONS, vol. 28, no. 1, janvier 1980 (1980-01), pages 73-83, XP000619824 NEW YORK, US**
• **CHEN, CAI: "Waveform optimization for OQAM-OFDM systems by using nonlinear programming algorithms" IEEE VEHICULAR TECHNOLOGY CONFERENCE, 4 mai 1997 (1997-05-04), pages 1385-1389, XP000199841 New York, US ISBN: 0-7803-3660-7**
• **LE FLOCH ET AL.: "Coded orthogonal frequency division multiplex" PROCEEDINGS OF THE IEEE, vol. 83, no. 6, juin 1995 (1995-06), pages 982-996, XP000518747 New York, US**

**Description**

Le domaine de l'invention est celui de la transmission et de la diffusion d'informations numériques. L'invention concerne notamment, mais non exclusivement, la transmission et la diffusion d'informations numériques à forte efficacité spectrale, sur une bande de f équence limitée, par exemple en environnement radiomobile.

La technique de modulation multiporteuse, associée par exemple à une technique de codage correcteur d'erreur et à un entrelacement, apporte une solution efficace au problème de la diffusion et de la transmission d'informations, par exemple en environnement radiomobile. Ainsi, la technique de modulation COFDM (en anglais "Coded Orthogonal Frequency Division Multiplexing") a été retenue pour les normes DAB (en anglais "Digital Audio Broadcasting", radiodiffusion sonore numérique), DVB-T (en anglais "Digital Video Broadcasting - Terrestrial", diffusion de télévision numérique de terre) et HIPERLAN/2 (en anglais "High Performance Local Area Network", réseau local sans fil haut débit).

La modulation multiporteuse utilisée dans le système COFDM, décrite par exemple dans le document de brevet français n° FR 2 765 757, comporte un système d'égalisation particulièrement simple, basé sur l'insertion d'un intervalle de garde. Cet intervalle de garde, encore appelé préfixe cyclique, assure un bon comportement face aux échos, au prix d'une perte en efficacité spectrale. C'est dans la perspective d'éviter cette perte, ou tout au moins de la réduire, que de nouvelles modulations multiporteuses sont actuellement à l'étude. Parmi celles-ci, l'invention porte plus particulièrement sur la modulation OFDM/OQAM (en anglais "Orthogonal Frequency Division Multiplexing / Offset Quadrature Amplitude Modulation") pour laquelle les porteuses sont mises en forme par la fonction prototype Iota. On rappelle que la fonction prototype Iota, décrite par exemple dans le document de brevet n° FR 2 733 869, a pour caractéristique d'être identique à sa transformée de Fourier. L'invention s'applique bien sûr également à tout autre type de modulation multiporteuse, notamment de type OFDM/OQAM, quelle que soit la fonction prototype associée.

Le procédé de mise en forme d'un signal électrique à partir de l'information à transmettre dépend bien sûr des conditions dans lesquelles un tel signal est transmis. On rappelle donc succinctement ci-après les caractéristiques d'un canal de transmission, notamment en environnement radiomobile, afin de mieux comprendre l'intérêt de l'utilisation, sur un tel canal, de modulations multiporteuses.

En environnement radiomobile, l'onde émise subit, lors de son parcours, de multiples réflexions, et le récepteur reçoit donc une somme de versions retardées du signal émis. Chacune de ces versions est atténuée et déphasée de façon aléatoire. Ce phénomène, connu sous le nom d'étalement des retards (en anglais "delay spread"), génère de l'interférence entre symboles (IES). Par exemple, dans un environnement de type urbain, l'étalement des retards est de l'ordre de ou inférieur à quelques microsecondes.

Le récepteur (par exemple le radiotéléphone mobile d'un automobiliste) étant supposé en mouvement, l'effet Doppler agit également sur chaque trajet, ce qui se traduit par un décalage en fréquence du spectre reçu, proportionnel à la vitesse de déplacement du récepteur. Il existe également de nombreux autres types d'effets Doppler, tous pouvant être pris en compte selon la présente invention.

La conjugaison de ces effets se traduit par un canal de transmission non stationnaire, présentant des évanouissements profonds à certaines fréquences (on obtient donc un canal sélectif en fréquence). Pour certaines applications, particulièrement intéressantes dans le cadre de l'invention, la bande de transmission est de largeur supérieure à la bande de cohérence du canal (c'est-à-dire à la bande pour laquelle la réponse fréquentielle du canal peut être considérée comme constante, sur une durée donnée). Des évanouissements apparaissent donc dans la bande, c'est-à-dire qu'à un instant donné, certaines fréquences de la bande sont fortement atténuées.

Pour combattre ces différents phénomènes (dus à l'IES et à l'effet Doppler), on a envisagé, notamment dans les systèmes de type OFDM, d'ajouter un intervalle de garde, pendant lequel on ne transmet pas d'informations utiles, de manière à garantir que toutes les informations reçues proviennent d'un même symbole. Dans le cas d'une démodulation cohérente des sous-porteuses, on corrige alors la distorsion apportée par le canal en estimant sa valeur en tout point du réseau temps-fréquence.

L'introduction d'un tel intervalle de garde permet de réduire les problèmes liés à l'interférence entre symboles, mais un inconvénient de cette technique de l'art antérieur est qu'elle est d'efficacité spectrale réduite, aucune information utile n'étant transmise pendant la durée de l'intervalle de garde.

Dans le cadre de l'invention, on a donc cherché une technique permettant de réduire l'interférence entre symboles affectant les signaux multiporteuses, sans introduire d'intervalle de garde.

Afin de mieux comprendre les phénomènes d'interférence entre symboles et/ou entre porteuses d'un multiplex, on rappelle ci-après les caractéristiques principales d'une modulation multiporteuse. Une modulation multiporteuse est avant tout une modulation numérique, c'est-à-dire un procédé de génération d'un signal électromagnétique, à partir d'une information numérique à transmettre. L'originalité et l'intérêt d'une telle modulation sont de découper la bande de fréquence allouée au signal en une pluralité de sous-bandes, choisies de largeur inférieure à la bande de cohérence du canal, et sur lesquelles le canal peut donc être considéré comme constant pendant la durée de transmission d'un symbole. L'information numérique à transmettre pendant cette durée est alors répartie sur chacune des sous bandes, de manière à :

- diminuer la rapidité de modulation (c'est-à-dire augmenter la durée symbole), sans modifier le débit transmis ;
- modéliser simplement l'action du canal sur chacune des sous-bandes, en ayant recours au modèle du multiplieur complexe.

En réception, un système peu complexe de correction des données reçues (consistant à effectuer une division complexe par le canal estimé) permet de récupérer l'information émise sur chacune des porteuses de façon satisfaisante, sauf pour les porteuses ayant subi un évanouissement profond. Dans ce cas, si aucune mesure de protection de l'information n'est prise, les données véhiculées par ces porteuses seront perdues. Un système multiporteuse n'est donc intéressant que si la génération du signal électrique est précédée de traitements numériques des données, tels qu'un codage correcteur d'erreurs et/ou un entrelacement par exemple.

On connaît notamment deux types de modulation multiporteuse orthogonale, décrites par exemple dans le document de brevet n° FR 2 733 869, dont on rappelle ci-après les caractéristiques.

L'ensemble des porteuses d'une modulation multiporteuse forme un multiplex. Chacune des porteuses de ce multiplex est mise en forme à l'aide d'une même fonction prototype, notée $g(t)$, qui caractérise la modulation multiporteuse. On notera $v_0$ l'espacement entre deux porteuses adjacentes du multiplex, et $\tau_0$ l'espacement temporel entre deux symboles multiporteuse émis. Le signal émis, à chaque instant $n\tau_0$, sur la m$^{ième}$ sous-bande de fréquence centrale $v_m$, est $a_{m,n}e^{i\varphi m,n}e^{2i\pi v_m t}g(t\text{-}n\tau_0)$, où les $a_{m,n}$ représentent les données numériques à transmettre. L'expression du signal émis en bande basse (centré autour de la fréquence $Nv_0$) est alors :

$$s(t) = \sum_n \sum_{m=0}^{2N-1} a_{m,n} e^{i\varphi_{m,n}} e^{2i\pi n v_0 t} g(t - n\tau_0) \qquad (\text{I})$$

On notera qu'on a ici envisagé, par souci de simplification, le cas d'un signal présentant un nombre pair de sous-bandes de fréquence. On peut bien sûr écrire plus généralement le signal sous la forme :

$$s(t) = \sum_n \sum_{m=0}^{M-1} a_{m,n} e^{i\varphi_{m,n}} e^{2i\pi n v_0 t} g(t - n\tau_0)$$

où M représente le nombre de porteuses d'un symbole de référence du signal.

On rappelle en effet que, selon une technique classique, on introduit des données numériques $a_{m,n}$ de valeur nulle sur les bords du spectre, ce qui modifie le nombre de termes intervenant effectivement dans la somme ci-dessus, et permet par exemple de se ramener à un nombre pair de porteuses.

Les fonctions $g_{m,n(t)}=e^{i\varphi m,n}e^{2ijm v_0 t}g(t\text{-}n\tau_0)$ sont appelées les translatées « temps-fréquence » de $g(t)$. Pour retrouver l'information transmise par chacune des sous-porteuses, il faut choisir $g(t)$ et les phases $\varphi_{m,n}$ de sorte que les translatées « temps-fréquence » ci-dessus soient séparables. Une condition suffisante pour vérifier cette propriété de séparabilité est que ces translatées soient orthogonales, au sens d'un produit scalaire défini sur l'ensemble des fonctions d'énergie finie (qui est un espace de Hilbert au sens mathématique).

On rappelle que l'espace des fonctions d'énergie finie admet les deux produits scalaires ci-dessous :

- le produit scalaire complexe $\langle x|y\rangle = \int_R x(t)y^*(t)dt$

- le produit scalaire réel $\langle x|y\rangle_R = \Re e \int_R x(t)y^*(t)dt$

On définit ainsi deux types de modulation multiporteuse :

- une modulation multiporteuse de type complexe, pour laquelle la fonction $g(t)$ choisie garantit une orthogonalité au sens complexe de ses translatées. C'est le cas par exemple de la modulation OFDM, encore nommée OFDM/QAM (en anglais "Orthogonal Frequency Division Multiplexing / Quadrature Amplitude Modulation"). Pour une telle modulation, $\varphi_{m,n} = 0$ et les données $a_{m,n}$ sont complexes.
- une modulation multiporteuse de type réel, pour laquelle la fonction g(t) choisie garantit une orthogonalité au sens réel de ses translatées. C'est le cas par exemple des modulations OFDM/OQAM, OFDM/OMSK (en anglais "Offset Minimum Shift Keying") ou OFDM/OQAM/IOTA. Pour un tel type de modulation, $\varphi_{m,n} = (\pi/2)^*(m+n)$ et les données $a_{m,n}$ sont réelles.

Les caractéristiques de ces deux types de modulation induisent des différences notoires, notamment en termes de densité du réseau temps-fréquence associé à la modulation considérée.

On rappelle que ces modulations multiporteuses étant destinées à transmettre des informations, notamment à haut débit, leur efficacité spectrale est assez élevée, et peut par exemple atteindre 4 bits/Hz (dans le cadre de la télévision numérique notamment). La transformation des bits issus d'un codeur correcteur d'erreur en symboles de modulation (en anglais "mapping") sera ainsi de type QAM (en anglais "quadrature amplitude modulation", modulation d'amplitude en quadrature).

La transmission d'une donnée complexe issue de la constellation QAM est donc mise en oeuvre différemment selon le type de modulation multiporteuse utilisée.

Ainsi, pour une modulation de type complexe, les parties réelle et imaginaire d'un complexe issu de la constellation QAM sont transmises simultanément, tous les temps symbole $T_s$ ; dans le cas d'une modulation de type réel, en revanche, les parties réelle et imaginaire sont transmises avec un décalage temporel d'un demi temps symbole ($T_s/2$) (on parle alors d'Offset QAM ou OQAM).

Pour une même bande de transmission et un même nombre de sous-porteuses, il faudra donc, pour transmettre les informations avec un même débit, que le rythme d'émission de symboles multiporteuses de type réel soit deux fois plus rapide que celui de symboles multiporteuses de type complexe.

Par ailleurs, ces deux modes de transmission de l'information sont caractérisés par la densité du réseau temps-fréquence d=1/($\nu_0 \tau_0$) associé. Ainsi, les modulations multiporteuses de type réel correspondent à une densité d=2, alors que les modulations multiporteuses de type complexe correspondent à une densité d=1.

Les caractéristiques distinctes des modulations multiporteuses de type réel d'une part, et de type complexe d'autre part, induisent des traitements différents lors de la mise en oeuvre d'une estimation du canal de transmission. Dans le cas d'une modulation multiporteuse de type réel, et ainsi qu'exposé dans la suite de ce document, le processus d'estimation de canal est en effet rendu plus délicat du fait qu'on ne dispose que d'une orthogonalité des translatées au sens réel. Afin de mieux appréhender ce problème, on s'attache désormais à décrire une technique connue d'estimation de canal, mise en oeuvre dans le cadre d'une modulation multiporteuse telle que présentée ci-dessus.

On suppose, dans la suite du raisonnement, que le choix des paramètres de la modulation multiporteuse assure que le canal peut être considéré comme plat sur chacune des sous-porteuse, pour chaque symbole OFDM. Le canal est alors modélisable par un coefficient complexe à estimer, $H_{m,n}$ (où m est l'indice de la sous-porteuse et n celui du symbole OFDM considérés).

Pour estimer le canal en OFDM, une technique classique consiste à insérer, dans le flux de porteuses utiles, des porteuses de référence, à des emplacements connus du récepteur. En réception, les valeurs prises par ces porteuses de référence, appelées pilotes, sont lues, et on en déduit aisément le gain complexe du canal à ces emplacements de référence. On dérive alors le gain complexe du canal sur l'ensemble des points du réseau temps-fréquence transmis, à partir de la valeur calculée du gain complexe aux emplacements de référence.

Dans le contexte de l'OFDM/QAM, on a notamment envisagé une méthode reposant sur la mise en oeuvre d'une estimation par symbole multiporteuse de référence (en anglais "preamble"). Selon cette technique, au moins un symbole de référence est placé en début de trame, une trame étant constituée d'un ensemble d'au moins un symbole de référence, appelé préambule, et d'un ensemble de symboles utiles, généralement appelé « payload ». Grâce à ce(s) symbole(s), le canal est estimé sur chacune des porteuses du multiplex. Le choix des paramètres du système (durée symbole, longueur de trame, etc...) assure que le canal varie lentement par rapport au temps symbole. On le suppose alors quasi-constant sur une trame. On peut donc utiliser l'estimée du canal sur le(s) symbole(s) de référence pour l'ensemble des symboles OFDM de la trame. Ce type d'estimation est préconisé dans la norme HIPERLAN/2 ("Broadband Radio Access Networks (BRAN) ; HIPERLAN Type 2 Technical Spécification ; Physical (PHY) layer", "Réseaux d'accès radio à large bande ; Spécification technique pour HIPERLAN Type 2 ; Couche physique", DTSBRAN-0023003, Octobre 1999).

L'invention présentée dans ce document s'applique plus particulièrement à cette méthode, dite d'estimation de canal par symboles de référence.

Ainsi que mentionné précédemment, dans le cas d'une modulation multiporteuse de type OFDM/OQAM (Offset QAM), le processus d'estimation de canal est rendu plus délicat du fait qu'on ne dispose que d'une orthogonalité des translatées au sens réel. En effet, pour estimer le gain complexe du canal sur une sous-porteuse donnée, il convient de réaliser la projection complexe du signal reçu sur la sous-porteuse considérée. Or, l'orthogonalité des translatées au sens réel et le fait que les fonctions prototypes, même choisies localisées au mieux en temps et en fréquence, sont de support infini sur au moins un des deux axes temporel ou fréquentiel, impliquent que, même sur un canal idéal, il y aura de l'interférence (intrinsèque) entre porteuses.

En effet, dans le cadre d'une modulation multiporteuse de type réel, la partie imaginaire de la projection du signal reçu sur la base des translatées de la fonction prototype n'est pas nulle. Il apparaît alors un terme perturbateur, qui vient s'ajouter au signal démodulé, et qu'il faut corriger avant de procéder à l'estimation du canal. Il est donc nécessaire de concevoir des méthodes permettant de compenser cette perte d'orthogonalité complexe, et palliant ainsi les inconvénients de cette technique de l'art antérieur pour les modulations de type OFDM/OQAM.

En effet, selon la technique exposée ci-dessus, on utilise la projection complexe du signal multiporteuse reçu $r(t)$, au point $(m_0, n_0)$ de l'espace temps-fréquence pour estimer le canal $\hat{H}_{m_0, n_0}$ en cette position. Ainsi, si l'on émet $\sqrt{E}$ en $(m_0, n_0)$, on a :

$$\hat{H}_{m_0, n_0} = \frac{\int r(t) g^*_{m_0, n_0}(t) dt}{\sqrt{E}}$$

En supposant que le canal est idéal ($r(t)$ = s(t)), on devrait donc avoir : $\hat{H}_{m_0, n_0} = 1$. Or

$$\int s(t) \, g^*_{m_0, n_0}(t) = \sqrt{E} + \underbrace{\sum_{(m,n) \neq (m_0, n_0)} a_{m,n} \int g_{m,n}(t) \, g^*_{m_0, n_0}(t)}_{l_{m_0, n_0} \in R} \qquad (\text{II})$$

L'équation (II) traduit le fait que la projection complexe du signal parfaitement transmis est néanmoins entachée d'une IES (interférence entre symboles) intrinsèque aux modulations OFDM/OQAM. On entend par IES une interférence entre symboles temporels et/ou entre porteuses.

L'existence de cette IES intrinsèque perturbe fortement l'estimation du canal de transmission.

L'invention a notamment pour objectif de pallier ces inconvénients de l'art antérieur.

Plus précisément, un objectif de l'invention est de fournir une technique de modulation multiporteuse permettant d'annuler, ou à tout le moins de réduire l'interférence intrinsèque entre symboles et/ou entre porteuses.

Un autre objectif de l'invention est de mettre en oeuvre une technique de modulation multiporteuse qui soit simple et peu coûteuse à mettre en oeuvre.

Encore un autre objectif de l'invention est de fournir une technique de modulation multiporteuse adaptée aux systèmes de type OFDM/OQAM.

L'invention a aussi pour objectif de mettre en oeuvre une technique de modulation multiporteuse permettant d'adapter la méthode d'estimation de canal par symboles de référence aux signaux de type OFDM/OQAM.

L'invention a également pour objectif de fournir une technique de modulation multiporteuse permettant de mettre en oeuvre une estimation de canal par symboles de référence plus précise que selon les techniques de l'art antérieur.

L'invention a encore pour objectif de mettre en oeuvre une technique de modulation multiporteuse permettant une réception, une démodulation et un décodage améliorés du signal multiporteuse émis.

L'invention a aussi pour objectif de fournir une technique de modulation multiporteuse permettant l'annulation, ou à tout le moins la réduction de l'interférence intrinsèque sur des symboles OFDM entiers.

Ces objectifs, ainsi que d'autres qui apparaîtront par la suite, sont atteints à l'aide du procédé de transmission selon la revendication 1, du signal multiporteuse selon la revendication 14, du procédé de réception selon la revendication 15, du récepteur selon la revendication 17 et du dispositif d'émission selon la revendication 18. Les revendications dépendantes définissent des caractéristiques supplémentaires.

Ainsi, l'invention repose sur une approche tout à fait nouvelle et inventive de la mise en trame d'un signal multiporteuse, permettant de réduire les effets néfastes de l'interférence entre symboles affectant le signal lors de sa transmission. En effet, il n'existe à ce jour aucune technique performante de réduction de l'interférence entre symboles et/ou entre porteuses pour les modulations multiporteuses de type OFDM/OQAM. On a envisagé, pour une modulation multiporteuse de type COFDM/QAM, d'introduire un intervalle de garde, pendant lequel aucune information utile n'est transmise, de manière à garantir que toutes les données reçues appartiennent à un même symbole COFDM/QAM. Cependant, une telle technique ne permet pas d'optimiser le débit de transmission ou de diffusion des informations et n'est, par ailleurs, pas applicable aux modulations de type OFDM/OQAM. L'invention propose donc une technique innovante d'annulation de l'interférence intrinsèque affectant les symboles de référence des trames de symboles OFDM, consistant à imposer une contrainte sur la valeur de l'un au moins des éléments de données de tels symboles de référence.

Avantageusement, chacune desdites trames comprend au moins un symbole de référence formé intégralement d'éléments de données de référence connus d'au moins un récepteur et respectant au moins une contrainte sur la valeur d'au moins un desdits éléments de données de référence, de façon à réduire, à la réception, au moins un terme d'interférence affectant au moins un autre desdits éléments de données de référence.

Selon un mode de réalisation avantageux de l'invention, un tel signal est de type OFDM/OQAM.

En effet, on s'intéresse plus particulièrement à la réduction de l'interférence intrinsèque entre symboles et/ou entre porteuses affectant des signaux de type OFDM/OQAM, notamment en vue d'améliorer l'estimation de canal par symboles de référence. Ainsi que mentionné précédemment dans le document, une telle technique d'estimation de canal est en effet couramment utilisée dans le cas de signaux de type OFDM/QAM, mais est rendue très délicate dans le cas de modulations de type réel, pour lesquelles on ne dispose que d'une orthogonalité des translatées au sens réel. Il est donc particulièrement intéressant de chercher à améliorer l'estimation de canal pour ce type de signaux multiporteuses.

Selon une caractéristique avantageuse de l'invention, le ou lesdits symboles de référence sont placés au début de chacune desdites trames, de manière à constituer un préambule d'au moins un symbole de référence.

De cette façon, on peut par exemple mettre en oeuvre une estimation du canal de transmission au début de chacune des trames de symboles, et utiliser, sur l'ensemble de la trame, l'estimation calculée.

Avantageusement, un tel signal est de la forme $s(t) = \sum_{n} \sum_{m=0}^{M-1} a_{m,n} e^{i\varphi_{m,n}} e^{2i\pi m \nu_0 t} g(t - n\tau_0),$ où g est une fonction prototype prédéterminée telle que lesdites porteuses sont orthogonales, et où les termes $a_{m,n}$ sont réels et représentent lesdits éléments de données, $\tau_0$ étant la durée d'un desdits symboles et $\nu_0$ l'espacement entre lesdites fréquences porteuses, avec $1/(\nu_0 \tau_0)=2$, et où $\varphi_{m,n}=(\pi/2)*(m+n)$, m et n étant caractéristiques de la position, respectivement dans l'espace fréquence et dans l'espace temps, de la porteuse portant l'élément de données $a_{m,n}$, M étant le nombre de porteuses d'un symbole de référence du signal.

Comme mentionné précédemment, selon une technique classique, on introduit des éléments de données $a_{m,n}$ de valeur nulle sur les bords du spectre, ce qui modifie le nombre de termes intervenant effectivement dans l'expression du signal ci-dessus. Par exemple, on peut envisager que l'expression du signal *s(t)* ci-dessus présente un nombre pair de sous-bandes de fréquence.

Selon une technique avantageuse de l'invention, ladite fonction g est une fonction paire, réelle et isotrope, vérifiant les relations suivantes :

$$\alpha_1 = A_g(0,\nu_0) = A_g(0,-\nu_0) = \alpha_2 = A_g(\tau_0,0) = A_g(-\tau_0,0)$$

et $A_g(2m\nu_0, 2n\tau_0) = \delta_{m,0} \cdot \delta_{n,0}$ Pour tous les couples (m,n) d'entiers,
où $A_g$ est la fonction d'ambiguïté de ladite fonction g.

On rappelle, en annexe 1, les caractéristiques de la fonction d'ambiguïté $A_g$ de la fonction *g*.

Préférentiellement, ladite fonction g est la fonction Iota.

On rappelle que la fonction Iota, généralement notée $\Im$, présente la caractéristique d'être identique à sa transformée de Fourier. Une telle fonction prototype Iota, décrite notamment dans le document de brevet n° FR 2 733 869, est donc particulièrement intéressante dans le cadre des modulations multiporteuses de type OFDM/OQAM.

De manière avantageuse, une desdites contraintes consiste à annuler, pour au moins un symbole de référence, un terme d'interférence due au moins partiellement aux porteuses directement voisines dudit symbole de référence dans l'espace temps-fréquence.

Ainsi, par exemple, on peut annuler l'interférence intrinsèque (IES) due aux porteuses appartenant à la première couronne d'une porteuse donnée du symbole de référence, et éventuellement un terme d'interférence due aux porteuses appartenant à la deuxième couronne entourant la porteuse étudiée.

Avantageusement, ledit au moins un symbole de référence comprend au moins deux porteuses modulées supplémentaires par rapport aux autres symboles formant ledit signal, lesdites porteuses modulées supplémentaires étant placées sur les bords du spectre dudit signal.

On apporte ainsi une solution au problème des porteuses situées sur les bords du spectre du signal, pour lesquelles on ne peut pas définir de couronne complète.

De manière préférentielle, ledit préambule étant constitué d'au moins trois symboles de référence, appelés respectivement symbole précédent, symbole central et symbole suivant, une desdites contraintes consiste à annuler, pour ledit symbole de référence central, un terme d'interférence due audit symbole précédent et audit symbole suivant.

De cette façon, on peut mettre en oeuvre une technique d'estimation du canal à partir du symbole central du préambule, dont on garantit qu'il n'est pas affecté par l'IES due aux symboles précédent et suivant. On peut ainsi obtenir une estimation du canal de transmission beaucoup plus précise que selon les techniques de l'art antérieur.

Avantageusement, un tel signal respecte les contraintes suivantes :

$$(a_{m_0-1,n_0} - a_{m_0+1,n_0})(-1)^{n_0} + a_{m_0,n_0-1} - a_{m_0,n_0+1} = 0$$

et

$$a_{m_0-1,n_0-1} + a_{m_0+1,n_0+1} + a_{m_0+1,n_0-1} + a_{m_0-1,n_0+1} = 0$$

où $n_0$ est caractéristique dudit symbole central et où $m_0 \in [0, M\text{-}1]$, M étant le nombre de porteuses d'un symbole de référence dudit signal.

Selon un mode de réalisation avantageux de l'invention, la position dudit symbole central dans l'espace temps étant caractérisée par l'indice $n_0$, ledit symbole central est constitué d'un motif régulier comprenant une alternance de deux porteuses portant un élément de données de valeur $+\sqrt{e}$ et de deux porteuses portant un élément de données de valeur $-\sqrt{e}$, et, $n_0$ étant pair (respectivement impair), ledit symbole précédent est constitué d'un motif régulier obtenu en opérant un décalage d'un pas vers la gauche (respectivement la droite) dans l'espace fréquence dudit motif régulier constituant ledit symbole central, et ledit symbole suivant est constitué d'un motif régulier obtenu en opérant un décalage d'un pas vers la droite (respectivement la gauche) dans l'espace fréquence dudit motif régulier constituant ledit symbole central.

De tels motifs (pour un symbole central d'indice $n_0$ pair d'une part, et d'indice $n_0$ impair d'autre part) correspondent en effet à des structures du préambule, permettant l'annulation de l'interférence intrinsèque affectant le symbole central. Dans cet exemple de réalisation, $e$ désigne l'énergie des symboles transmis sur chacune des porteuses.

Selon une technique avantageuse de l'invention, ledit préambule étant constitué d'au moins cinq symboles de référence, comprenant deux symboles précédents, un symbole central et deux symboles suivants, une desdites contraintes consiste à annuler, pour ledit symbole central, un terme d'interférence due auxdits deux symboles précédents et auxdits deux symboles suivants.

On s'attache alors à annuler l'interférence intrinsèque affectant le symbole central du préambule, due aux première et deuxième couronnes de porteuses entourant ce symbole central.

Préférentiellement, un tel signal respecte la contrainte suivante :

$$C^{1\&2}_{m_0,n_0} = \sum_{(m,n)\in Couronne^{1\&2}_{m_0,n_0}} a_{m,n} i^{(m-m_0)+(n-n_0)+(m-m_0)(n+n_0)} A_g((n_0-n)\tau_0,(m_0-m)\nu_0) = 0$$

avec

$$Couronne^{1\&2}_{m_0,n_0} = \left\{ (m,n) telque ((m-m_0),(n-n_0)) \in \{-2,-1,0,1,2\}^2 et (m,n) \neq (m_0,n_0) \right\}$$

et où $m_0 \in [0,M\text{-}1]$, M étant le nombre de porteuses d'un symbole de référence dudit signal.

Selon un mode de réalisation préféré de l'invention, la position dudit symbole central dans l'espace temps étant caractérisée par l'indice $n_0$, ledit symbole central est constitué d'un motif régulier comprenant une alternance de deux porteuses portant un élément de données de valeur $+\sqrt{e}$ et de deux porteuses portant un élément de données de valeur $-\sqrt{e}$, et, $n_0$ étant pair (respectivement impair), ledit symbole d'indice $n_0$-1 est constitué d'un motif régulier obtenu en opérant un décalage d'un pas vers la gauche (respectivement la droite) dans l'espace fréquence dudit motif régulier constituant ledit symbole central, et ledit symbole d'indice $n_0$+1 est constitué d'un motif régulier obtenu en opérant un décalage d'un pas vers la droite (respectivement la gauche) dans l'espace fréquence dudit motif régulier constituant ledit symbole central, et, $n_0$ étant pair (respectivement impair), ledit symbole d'indice $n_0$-2 est constitué d'un motif régulier obtenu en opérant un décalage d'un pas vers la gauche (respectivement la droite) dans l'espace fréquence dudit motif régulier constituant ledit symbole d'indice $n_0$-1, et ledit symbole d'indice $n_0$+2 est constitué d'un motif régulier obtenu en opérant un décalage d'un pas vers la droite (respectivement la gauche) dans l'espace fréquence dudit motif régulier constituant ledit symbole d'indice $n_0$+1.

On étend ainsi les motifs réguliers présentés précédemment dans le cadre d'un préambule comprenant trois symboles, au cas d'un préambule constitué de 5 symboles. A nouveau, dans cette variante de réalisation, e désigne par exemple l'énergie des symboles transmis sur chacune des porteuses.

Avantageusement, la longueur d'une desdites trames est choisie de manière à respecter une hypothèse d'invariance dudit canal sur ladite trame.

De cette façon, on peut réaliser une estimation du canal de transmission à partir du symbole central du préambule, dont on garantit, selon l'invention, qu'il n'est pas affecté par l'interférence intrinsèque due aux symboles précédent et suivant, et utiliser ensuite cette estimation précise sur l'ensemble de la trame de symboles OFDM/OQAM reçue.

Un procédé de réception selon la revendication 15 permet, à coût égal, de réaliser des récepteurs de signaux multiporteuses de meilleure qualité que selon les techniques de l'art antérieur. Il permet également, à qualité égale, de réaliser des récepteurs de signaux multiporteuses meilleur marché que selon les techniques de l'art antérieur. En effet; l'annulation de l'interférence intrinsèque affectant le préambule de la trame de symboles émises permet d'obtenir une estimation du canal de transmission beaucoup plus précise que selon les techniques de l'art antérieur.

Avantageusement, dans ladite sous-étape de détermination, on tient compte, pour chacune desdites porteuses de référence :

- des porteuses voisines définissant une couronne autour de ladite porteuse de référence, lorsqu'une telle couronne existe ;
- pour les porteuses de référence des bords du spectre dudit signal, lorsque ladite couronne n'est pas complète, les coefficients de ladite fonction de transfert sont déterminés par extrapolation.

En effet, si les symboles de référence et les symboles utiles du signal comprennent le même nombre M de porteuses, les contraintes précitées imposées au signal ne peuvent être respectées par les porteuses de référence du bord du spectre du signal : pour ces dernières en effet, on ne peut pas définir de couronne de porteuses complète. Par couronne, on entend ici la première couronne entourant une porteuse, la deuxième couronne, ou toute couronne d'ordre supérieur entourant une porteuse donnée.

On a donc envisagé de mettre en oeuvre une extrapolation pour les porteuses des bords du spectre du signal, permettant de déterminer les valeurs des coefficients de la fonction de transfert du canal associés à ces porteuses d'extrémités. Les valeurs de tels coefficients sont extrapolées à partir des valeurs des autres coefficients de la fonction de transfert, associés aux porteuses de référence pour lesquelles la ou les couronnes de porteuses existent.

Lorsqu'on cherche à annuler l'interférence intrinsèque due à la première couronne de porteuses entourant une porteuse de référence donnée, une telle extrapolation n'est bien sûr pas nécessaire si les symboles de référence comprennent au moins deux porteuses de plus que les symboles utiles, placées respectivement sur chacun des bords du spectre du signal. De même, lorsqu'on cherche à annuler, par exemple, l'interférence intrinsèque due aux première et deuxième couronnes de porteuses, une telle extrapolation n'est pas nécessaire si les symboles de référence comprennent au moins quatre porteuses de plus que les symboles utiles..

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- la figure 1 illustre la définition de la première couronne relative à une porteuse donnée d'un signal multiporteuse mis en oeuvre selon l'invention ;
- la figure 2 présente un exemple de structure du préambule d'une trame de symboles OFDM/OQAM, permettant l'annulation de l'interférence intrinsèque affectant le symbole central d'indice $n_o$ pair, due notamment à la première couronne illustrée en figure 1 ;
- la figure 3 illustre un exemple de structure du préambule d'une trame de symboles OFDM/OQAM, permettant l'annulation de l'interférence intrinsèque affectant le symbole central d'indice $n_o$ impair.

Le principe général de l'invention repose sur l'introduction d'une contrainte sur la valeur d'au moins un élément de données d'un symbole de référence dans un signal OFDM/OQAM, de manière à réduire l'interférence intrinsèque entre symboles, et donc à permettre notamment une meilleure estimation de canal.

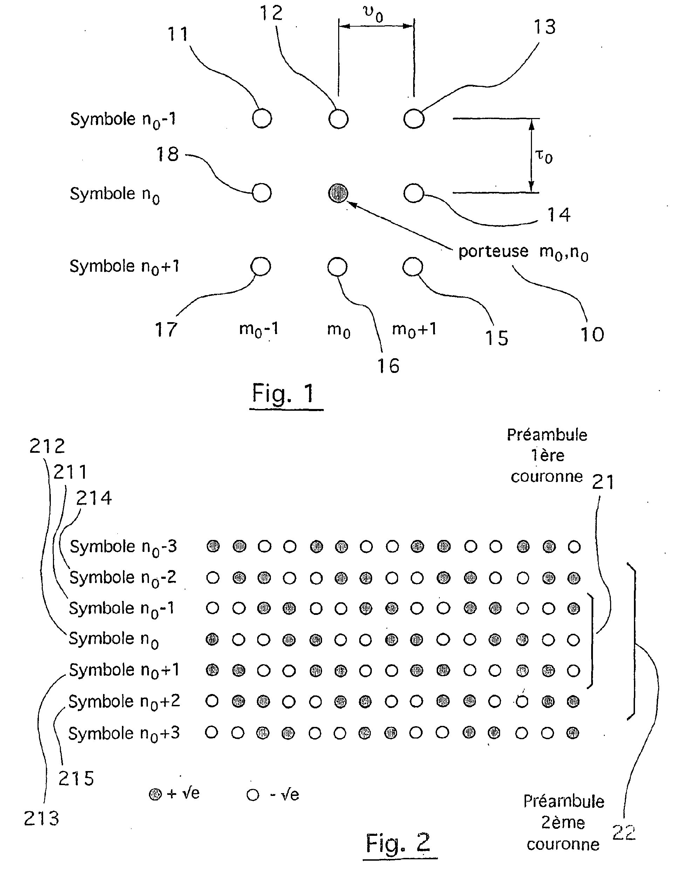

On présente, en relation avec la figure 1, un mode de réalisation de l'annulation de l'interférence intrinsèque due à la première couronne d'une porteuse de référence du préambule.

On rappelle tout d'abord quelques notions relatives à l'interférence intrinsèque.

1. La fonction d'ambiguïté

La définition et les caractéristiques de la fonction d'ambiguïté d'une forme d'onde sont par exemple décrites dans le document de brevet n° FR 2 733 869. Pour mémoire, ces informations sont rappelées en Annexe 1 de la présente demande de brevet. On rappelle néanmoins ici l'expression de la fonction d'ambiguïté de la fonction $x(t)$ :

$$A_x(\tau,\nu) = \int_{\Re} e^{-2i\pi\nu t} x(t + \tau/2) x^*(t - \tau/2) dt$$

On rappelle également quelques propriétés de la fonction d'ambiguïté :

- si une fonction $x$ est paire, sa fonction d'ambiguïté est réelle ;
- si de plus $x$ est réelle, sa fonction d'ambiguïté est paire selon la variable fréquentielle $\nu$ ;
- si de plus, $x$ est isotrope (c'est-à-dire $x$ est égale à sa transformée de Fourier), sa fonction d'ambiguïté est paire selon la variable temporelle $\tau$.

On supposera par la suite que la fonction prototype $g(t)$ associée au signal multiporteuse considéré vérifie ces propriétés. C'est notamment le cas de la forme d'onde Iota, $\mathfrak{I}(t)$, décrite dans le document de brevet n° FR 2 733 869.

2 Orthogonalité des sous-porteuses

Le produit scalaire complexe des translatées $g_{m,n}(t)$ et $g_{m',n'}(t)$ vaut:

$$\left\langle g_{m,n} \middle| g_{m',n'} \right\rangle = \int_{\mathfrak{R}} g_{m,n}(t).g^{*}{}_{m',n'}(t)dt$$

$$\left\langle g_{m,n} \middle| g_{m',n'} \right\rangle = \int_{\mathfrak{R}} i^{(m-m')+(n-n')}e^{2i\pi(m-m')\nu_0 t}g(t-n\tau_0)g^{*}(t-n'\tau_0)dt \qquad \text{(III)}$$

A partir de l'équation (III), et en posant le changement de variable $u = t - (n + n')\tau_0/2$, on obtient :

$$\left\langle g_{m,n} \middle| g_{m',n'} \right\rangle = i^{(m-m')+(n-n')}\int_{\mathfrak{R}} e^{2i\pi(m-m')\nu_0(u+(n+n')\tau_0/2)}g(u+(\frac{n+n'}{2}-n)\tau_0)g^{*}(u+(\frac{n+n'}{2}-n')\tau_0)d_i$$

$$\left\langle g_{m,n} \middle| g_{m',n'} \right\rangle = i^{(m-m')+(n-n')}e^{i\frac{\pi}{2}(m-m')(n+n')}\int_{\mathfrak{R}} e^{-2i\pi(m'-m)\nu_0 u}g(u+(n'-n)\tau_0/2)g^{*}(u-(n'-n)\tau_0/2)d_i$$

soit encore:

$$\left\langle g_{m,n} \middle| g_{m',n'} \right\rangle = i^{(m-m')+(n-n')+(m-m')(n+n')}A_g((n'-n)\tau_0,(m'-m)\nu_0) \qquad \text{(IV)}$$

Une condition nécessaire pour que la base de fonctions $\{g_{m,n}(t)\}$ soit orthogonale au sens réel est que $g(t)$ soit paire et que $A_g(2m\nu_0, 2n\tau_0) = \delta_{m,0}.\delta_{n,0}$
En effet, dans ce cas, on vérifie bien que :

$\forall(m,n)$ entiers,

$$\left\langle g_{m,n} \middle| g_{m',n'} \right\rangle_R = Re(i^{(m-m')+(n-n')+(m-m')(n+n')}A_g((n'-n)\tau_0,(m'-m)\nu_0)) = \delta_{m,m'}.\delta_{n,n'}$$

Par la suite, on supposera que $g(t)$ est telle que ces hypothèses sont vérifiées. C'est notamment le cas lorsque $g(t)$ est la fonction Iota.

3. Interférence intrinsèque (IES) dans le cas d'un canal idéal

Pour un canal idéal, l'interférence sur la porteuse d'étude $(m_0, n_0)$ dues aux autres porteuses du réseau temps-fréquence est exprimée par $I_{m_0,n_0}$ dans l'équation (II) :

$$I_{m_0,n_0} = \sum_{(m,n)\neq(m_0,n_0)} a_{m,n} \int g_{m,n}(t)\, g^*_{m_0,n_0}(t)$$

Etant donné le caractère fortement localisé en temps et en fréquence supposé de *g(t)*, les termes intervenant significativement dans cette interférence sont dus aux porteuses directement voisines de la porteuse *(m$_0$, n$_0$)*. Ces porteuses sont schématisées sur la figure 1 : elles constituent ce que nous appellerons la « première couronne » liée à la porteuse d'étude.

On considère ainsi la porteuse référencée 10, dont la position dans l'espace temps (respectivement dans l'espace fréquence) est indiquée par n$_0$ (respectivement m$_0$). Les porteuses référencées 11 à 18, qui sont directement voisines de la porteuse 10, constituent la première couronne de cette porteuse. Elles appartiennent aux symboles OFDM d'indices n$_0$-1, n$_0$ et n$_0$+1, et correspondent aux fréquences porteuses d'indices m$_0$, m$_0$-1 et m$_0$+1.

On note $D_{m_0,n_0}$ le terme d'interférence représentatif de la première couronne, c'est-à-dire le terme d'interférence dû aux porteuses référencées 11 à 18, et $D_{m_0,n_0}$ le terme d'interférence dû aux autres porteuses du réseau temps-fréquence.

Supposons que les $a_{m,n}$ sont des symboles BPSK (en anglais "Binary Phase Shift Keying", modulation binaire à décalage de phase) pris dans l'alphabet $\left\{-\sqrt{e}, +\sqrt{e}\right\}$. Les $a_{m,n}$ peuvent bien sûr être des symboles de toute autre nature, mais par souci de simplification, on ne s'attachera à décrire que le mode de réalisation particulier dans lequel les $a_{m,n}$ ne peuvent prendre que deux valeurs distinctes. L'invention s'applique également, de manière évidente, au cas où les $a_{m,n}$ peuvent prendre une pluralité de valeurs distinctes, par exemple 4. Si *g(t)* est la fonction Iota, on peut montrer que :

$$Var_{dB}\left(D_{m_0,n_0}\right) = Var_{dB}\left(C_{m_0,n_0}\right) - 18,6 dB$$

On constate donc que la contribution principale à l'interférence intrinsèque affectant une porteuse (m$_0$, n$_0$) d'un signal multiporteuse est celle de la première couronne entourant la porteuse considérée.

On décrit donc, dans la suite de ce document, un mode de réalisation particulier de l'invention, dans lequel on s'attache à annuler l'interférence intrinsèque entre symboles due à la première couronne, pour les porteuses du préambule d'un signal multiporteuse.

### 3.1. Interférence due aux porteuses décalées en fréquence seulement

On considère tout d'abord l'interférence intrinsèque affectant une porteuse, due aux porteuses de la première couronne émises au même instant, mais décalées en fréquence par rapport à la porteuse considérée.

Dans ce cas, n=n$_0$, et :

$$\left\langle g_{m,n}\,\middle|\,g_{m_0,n_0}\right\rangle = i^{(m-m_0)+(m-m_0)2n_0} A_g(0,(m_0-m)\nu_0) = i^{(m-m_0)(1+2n_0)} A_g(0,(m_0-m)\nu_0)$$

Deux cas sont alors à envisager, selon la valeur de la différence m-m$_0$ :

- Si m-m$_0$ = 1 :

$$\left\langle g_{m,n}\,\middle|\,g_{m_0,n_0}\right\rangle = i^{(1+2n_0)} A_g(0,-\nu_0) = (-1)^{n_0} i A_g(0,-\nu_0)$$

- Si m-m$_0$ = -1 :

$$\left\langle g_{m,n}\,\middle|\,g_{m_0,n_0}\right\rangle = i^{-(1+2n_0)} A_g(0,\nu_0) = -(-1)^{n_0} i A_g(0,\nu_0)$$

### 3.2. Interférence due aux porteuses décalées en temps seulement

On considère désormais l'interférence intrinsèque affectant une porteuse, due aux porteuses de la première couronne émises à la même fréquence, mais décalées en temps par rapport à la porteuse considérée.
Dans ce cas, $m = m_0$, et :

$$\left\langle g_{m,n} \middle| g_{m_0,n_0} \right\rangle = i^{n-n_0} A_g \left( (n_0 - n)\tau_0, 0 \right)$$

Deux cas sont alors à envisager, selon la valeur de la différence $n-n_0$ :

- Si $n-n_0 = 1$ :

$$\left\langle g_{m,n} \middle| g_{m_0,n_0} \right\rangle = i A_g(-\tau_0, 0)$$

- Si $n-n_0 = -1$ :

$$\left\langle g_{m,n} \middle| g_{m_0,n_0} \right\rangle = -i A_g(\tau_0, 0)$$

On déduit donc des relations ci-dessus, que l'annulation de l'interférence due aux porteuses décalées en temps seulement ou en fréquence seulement sur la porteuse $(m_0, n_0)$ peut être exprimée par la relation suivante :

$$\alpha_1 \left( a_{m_0-1,n_0} - a_{m_0+1,n_0} \right)(-1)^{n_0} + \alpha_2 \left( a_{m_0,n_0-1} - a_{m_0,n_0+1} \right) = 0 \qquad \text{(V)}$$

Où :

$$\alpha_1 = A_g(0, \nu_0) = A_g(0, -\nu_0)$$

$$\alpha_2 = A_g(\tau_0, 0) = A_g(-\tau_0, 0)$$

$a_{m,n} \in \mathfrak{R}$ est le symbole transmis sur la porteuse $(m,n)$.
On supposera que, outre les propriétés précitées de $g(t)$, le fonction prototype est telle que $\alpha_1 = \alpha_2$, qu'on notera $\alpha$. C'est notamment le cas de la fonction prototype Iota. L'équation (V) peut alors s'écrire :

$$\left( a_{m_0-1,n_0} - a_{m_0+1,n_0} \right)(-1)^{n_0} + a_{m_0,n_0-1} - a_{m_0,n_0+1} = 0 \qquad \text{(VI)}$$

On notera que, l'équation (VI) dépendant de la valeur de $n_0$, on a deux équations distinctes selon que $n_0$ est pair ou impair.

### 3.3. Interférence due aux porteuses décalées en temps et en fréquence

On distingue alors quatre cas, selon la position de la porteuse dont on cherche à annuler l'interférence au sein de la première couronne :

- si $m-m_0=1$ et $n-n_0=1$ :

$$\left\langle g_{m,n} \mid g_{m_0,n_0} \right\rangle = i^{1+1+2n_0+1} A_g\left(-\tau_0, -\nu_0\right) = -(-1)^{n_0} i A_g\left(-\tau_0, -\nu_0\right)$$

- si $m-m_0=1$ et $n-n_0=-1$ :

$$\left\langle g_{m,n} \mid g_{m_0,n_0} \right\rangle = i^{2n_0-1} A_g\left(\tau_0, -\nu_0\right) = -(-1)^{n_0} i A_g\left(\tau_0, -\nu_0\right)$$

- si $m-m_0=-1$ et $n-n_0=1$ :

$$\left\langle g_{m,n} \mid g_{m_0,n_0} \right\rangle = i^{-2n_0-1} A_g\left(-\tau_0, \nu_0\right) = -(-1)^{n_0} i A_g\left(-\tau_0, \nu_0\right)$$

- si $m-m_0=-1$ et $n-n_0=-1$ :

$$\left\langle g_{m,n} \mid g_{m_0,n_0} \right\rangle = i^{-2n_0-1} A_g\left(\tau_0, \nu_0\right) = -(-1)^{n_0} i A_g\left(\tau_0, \nu_0\right)$$

De plus, les caractéristiques précitées de g(t) impliquent que :

$$A_g\left(\tau_0, \nu_0\right) = A_g\left(-\tau_0, \nu_0\right) = A_g\left(-\tau_0, -\nu_0\right) = A_g\left(\tau_0, -\nu_0\right),$$

qu'on notera $\beta$.

On en déduit donc que l'annulation de l'interférence due aux porteuses décalées en temps et en fréquence s'exprime à l'aide de la relation suivante :

$$\left(a_{m_0-1,n_0-1} + a_{m_0+1,n_0+1} + a_{m_0+1,n_0-1} + a_{m_0-1,n_0+1}\right)(-1)^{n_0} = 0 \qquad \text{(VII)}$$

Bien que cette équation dépende de la valeur de $n_0$, elle peut toujours être annulée en choisissant les valeurs de $a_{m,n}$ suivantes :

$$a_{m_0-1,n_0-1} + a_{m_0+1,n_0+1} + a_{m_0+1,n_0-1} + a_{m_0-1,n_0+1} = 0 \qquad \text{(VIII)}$$

On obtient donc une seule relation unissant les éléments de données de la première couronne, quelle que soit la position du symbole, c'est-à-dire, quelle que soit la valeur de $n_0$.

On déduit donc des équations précédentes qu'une condition nécessaire et suffisante pour annuler $D_{m_0,n_0}$ est :

$$\alpha\left(a_{m_0+1,n_0} - a_{m_0-1,n_0}\right) + (-1)^{n_0}\left(a_{m_0,n_0+1} - a_{m_0,n_0-1}\right)$$
$$-\beta(a_{m_0+1,n_0+1} + a_{m_0-1,n_0+1} + a_{m_0+1,n_0-1} + a_{m_0-1,n_0-1}) = 0 \qquad \text{(IX)}$$

4. Interférence intrinsèque (IES) dans le cas d'un canal réaliste

On s'attache désormais à établir la contrainte que doivent respecter les éléments de données des porteuses de la première couronne pour permettre l'annulation de l'interférence intrinsèque dans le cas d'un canal réaliste.

On rappelle que, pour un canal réaliste, et étant donnée la modélisation de l'action du canal rappelée précédemment, l'IES intrinsèque sur la porteuse $(m_0,n_0)$ s'écrit :

$$I_{m_0,n_0}^{r\acute{e}aliste} = \sum_{(m,n)\neq(m_0,n_0)} a_{m,n} H_{m,n} \int g_{m,n}(t)\, g_{m_0,n_0}^{*}(t)$$

L'IES intrinsèque due à la première couronne dans ce cas réaliste est donc égale à :

$$C_{m_0,n_0}^{r\acute{e}aliste} = \sum_{(m,n)\in Couronne_{m_0,n_0}} a_{m,n} H_{m,n}\, i^{(m-m_0)+(n-n_0)+(m-m_0)(n+n_0)} A_g((n_0-n)\tau_0,(m_0-m)\nu_0)$$

Pour pouvoir annuler simplement ce terme d'interférence intrinsèque, on supposera que le canal peut être considéré comme constant sur cette première couronne. Ainsi, on aura :

$$C_{m_0,n_0}^{r\acute{e}aliste} \approx H_{m_0,n_0} \underbrace{\sum_{(m,n)\in Couronne_{m_0,n_0}} a_{m,n}\, i^{(m-m_0)+(n-n_0)+(m-m_0)(n+n_0)} A_g((n_0-n)\tau_0,(m_0-m)\nu_0)}_{C_{m_0,n_0}}$$

et donc :

$$\int r(t)\, g_{m_0,n_0}^{*}(t) \approx H_{m_0,n_0} a_{m_0,n_0} + H_{m_0,n_0} \underbrace{C_{m_0 n_0}}_{\grave{a}\ annuler} + D_{m_0,n_0}^{r\acute{e}aliste} \qquad\qquad (X)$$

Cette hypothèse, que l'on réalise en pratique, selon l'invention, en choisissant les paramètres de la modulation de façon adéquate, permet de se ramener à une annulation du même terme ($D_{m_0,n_0}$) que dans le cas d'un canal idéal.

### 7. Mise en trame limitant l'interférence intrinsèque sur un symbole OFDM/OQAM entier

On rappelle que l'invention réside en la conception d'un préambule spécifique permettant l'annulation de la partie significative de l'interférence intrinsèque, sur tout un symbole OFDM/OQAM, et en la mise en trame de l'information utile à transmettre qui en résulte. Ce préambule spécifique, constituant un symbole de référence, peut ensuite être utilisé pour l'estimation du canal. A partir des valeurs reçues sur chaque porteuse, on est capable de retrouver, par simple division par la valeur émise connue, les coefficients $H_{n,k}$ qui représentent une bonne estimation du canal de transmission.
On rappelle que, pour mettre en oeuvre une telle estimation de canal par symbole de référence, le canal est supposé quasi-invariant sur l'ensemble de la trame.

### 7.1. Préambule

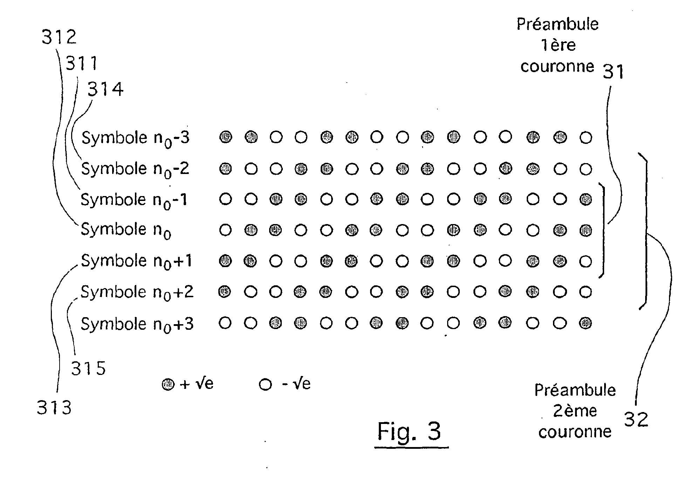

On présente, en relation avec les figures 2 et 3, la structure particulière des préambules permettant d'annuler les première et deuxième couronnes relatives à une porteuse donnée. La figure 2 (respectivement la figure 3) présente plus particulièrement le motif régulier mis en oeuvre dans un préambule pour une valeur de l'indice du symbole central $n_0$ paire (respectivement impaire).

#### 7.1.1. Annulation de l'IES due à la première couronne

Pour le symbole d'indice $n_0$, on veut que $\forall m \in \{0,...,M-1\}$, $C_{m,n_0} = 0$. En effet, on veut que, pour toutes les porteuses du symbole central, l'interférence intrinsèque due à la première couronne de porteuses soit nulle. Pour cela, nous déterminons un motif qui assure que les relations (IV) et (VI) sont vérifiées pour $(m,n_0)$, m=0. M-1, où M est le nombre de porteuses d'un symbole de référence du signal, sauf éventuellement pour les porteuses de référence des bords du spectre du signal, pour lesquelles on ne peut pas définir de couronne de porteuses complète.
Pour apporter une solution au problème des porteuses des bords du spectre du signal, on a envisagé, selon une première variante de réalisation, de transmettre des symboles de référence comprenant M porteuses, numérotées de 0 à M-1, et des symboles utiles comprenant seulement M-2 porteuses, numérotées de 1 à M-2. Ainsi, les deux porteuses modulées supplémentaires situées sur chacun des bords du spectre du signal permettent de compléter à première couronne des porteuses de référence d'indice 1 et M-2, pour lesquelles on peut donc vérifier les équations (IV) et (VI). On notera bien sûr qu'une telle variante de réalisation s'applique aux porteuses modulées, c'est-à-dire en l'absence de porteuses nulles sur les bords du spectre du signal.
De plus, une telle variante de réalisation permet d'améliorer les performances du filtrage passe-bas du signal, mis en oeuvre à la réception. En effet, la largeur du filtre passe-bas mis en oeuvre selon une telle variante de réalisation est déterminée par la largeur fréquentielle du ou des symboles de référence, qui est supérieure à celle des symboles utiles, ce qui permet donc une meilleure protection des données utiles.

Une deuxième variante de réalisation permettant de compenser le problème des porteuses de référence situées sur les bords du spectre du signal consiste à transmettre des symboles de référence et des symboles utiles comprenant M porteuses, et à mettre en oeuvre, lors de l'estimation du canal, une extrapolation des coefficients de la fonction de transfert du canal pour obtenir au mieux les coefficients d'indices 0 et M-1.

Bien que ces deux variantes de réalisation ne soient pas incompatibles, on privilégie généralement l'une ou l'autre de ces deux méthodes.

Dans un mode de réalisation particulier de l'invention, représenté en figures 2 et 3, on choisit d'utiliser des signaux QPSK (en anglais "Quadrature Phase Shift Keying") pour leur robustesse. Les parties réelles et imaginaires des symboles QPSK peuvent prendre les valeurs $\pm\sqrt{e}$, $e$ étant l'énergie des symboles transmis sur chacune des porteuses. On peut bien sûr également choisir d'utiliser tout autre type de signaux adaptés à l'invention.

Pour éliminer l'interférence due à la première couronne sur un symbole OFDM/OQAM, il faut tenir compte, selon l'invention, du symbole précédent et du symbole suivant. On choisit ainsi un préambule 21 (respectivement 31) constitué de trois symboles OFDM/OQAM 211, 212 et 213, (respectivement 311, 312 et 313) ainsi qu'illustré en figure 2 (respectivement 3). On vérifie ensuite l'annulation des relations (VI) et (VIII) sur le symbole central 212 (respectivement 312) du préambule, en supposant que le canal de transmission est constant sur la première couronne de porteuses, constituée des symboles précédant 211 (respectivement 311) et suivant 213 (respectivement 313).

Le préambule spécifique permettant d'annuler l'IES due à la première couronne sur le symbole 212 (respectivement 312) d'indice $n_0$ pour les valeurs de $n_0$ paires (respectivement impaires) est représentée sur la figure 2 (respectivement sur la figure 3).

On remarque que, selon le mode de réalisation particulier illustré en figures 2 et 3, le symbole central 212 (respectivement 312) d'indice $n_0$ est constitué d'une alternance de deux porteuses dont l'élément de données vaut $+\sqrt{e}$, et de deux porteuses dont l'élément de données vaut $-\sqrt{e}$.

Dans le cas d'un symbole central 212 d'indice $n_0$ pair, le symbole précédent 211 (respectivement suivant 213) est obtenu à partir du symbole central 212 en décalant les porteuses d'un pas vers la gauche (respectivement vers la droite) dans l'espace fréquence.

Dans le cas d'un symbole central 312 d'indice $n_0$ impair, le symbole précédent 311 (respectivement suivant 313) est obtenu à partir du symbole central 312 en décalant les porteuses d'un pas vers la droite (respectivement vers la gauche) dans l'espace fréquence.

*7.1.2. Annulation de l'IES due aux deux premières couronnes*

On fait l'hypothèse que la fonction prototype $g(t)$ est réelle et paire et telle que $A_g(2n\tau_0, 2m\nu_0) = \delta_{m,0}.\delta_{n,0}$.

On peut alors montrer qu'en considérant un préambule 22 (respectivement 32) constitué de 5 symboles consécutifs des motifs illustrés en figures 2 et 3, et en supposant que sur ces 5 symboles, le canal est invariant, l'interférence intrinsèque (IES) due à la deuxième couronne sur le symbole central 212 (respectivement 312) est également annulée.

Notons $C^{1\&2}_{m_0,n_0}$ l'IES correspondant à ces 2 premières couronnes :

$$C^{1\&2}_{m_0,n_0} = \sum_{(m,n)\in Couronne^{1\&2}_{m_0,n_0}} a_{m,n} i^{(m-m_0)+(n-n_0)+(m-m_0)(n+n_0)} A_g((n_0-n)\tau_0,(m_0-m)\nu_0) = 0$$

avec

$$Couronne^{1\&2}_{m_0,n_0} = \left\{(m,n) \text{ tel que } ((m-m_0),(n-n_0))\in\{-2,-1,0,1,2\}^2 \text{ et } (m,n)\neq(m_0,n_0)\right\}$$

où $m_0 \in [0,M\text{-}1]$, sauf éventuellement pour les porteuses de référence situées sur les bords du spectre du signal, c'est-à-dire pour les porteuses d'indice 0 et M-1.

Comme mentionné précédemment, pour compenser le problème des porteuses des bords du spectre du signal, on peut mettre en oeuvre, lors de l'estimation du canal, une extrapolation des coefficients de la fonction de transfert du canal, de manière à déterminer au mieux les coefficients d'indices 0, 1, M-2 et M-1, associés aux porteuses des bords du spectre du signal.

On peut également envisager de transmettre des symboles de référence comportant plus de porteuses que les symboles utiles. Par exemple, on peut constituer des symboles de référence comprenant M porteuses, indicées de 0 à M-1, et des symboles utiles comprenant M-4 porteuses, indicées de 2 à M-3. De cette façon, on garantit que les première et deuxième couronnes des porteuses de référence d'indice 2 et M-3 sont complètes.

Bien que ces deux méthodes ne soient pas incompatibles, on privilégie généralement l'une ou l'autre de ces variantes de réalisation pour résoudre le problème des porteuses de référence des bords du spectre du signal.

La structure d'un préambule 22 (respectivement 32) constitué de 5 symboles-211 à 215 (respectivement 311 à 315) pour un symbole central 212 (respectivement 312) d'indice $n_0$ pair (respectivement impair) est illustrée en figure 2 (respectivement en figure 3).

Un tel préambule 22 est constitué du préambule 21, correspondant à l'annulation de l'interférence due à la première couronne, et de deux symboles référencés 214 et 215. Le symbole référencé 214 (respectivement 215) est obtenu à partir du symbole précédent 211 (respectivement suivant 213) en opérant un décalage des porteuses d'un pas vers la gauche (respectivement vers la droite) dans l'espace fréquence, lorsque l'indice $n_0$ du symbole central 212 est pair.

De même, un tel préambule 32 est constitué du préambule 31, correspondant à l'annulation de l'interférence due à la première couronne, et de deux symboles référencés 314 et 315. Le symbole référencé 314 (respectivement 315) est obtenu à partir du symbole précédent 311 (respectivement suivant 313) en opérant un décalage des porteuses d'un pas vers la droite (respectivement vers la gauche) dans l'espace fréquence, lorsque l'indice $n_0$ du symbole central 312 est impair.

### 7.2. Mise en trame

Pour un système de transmission ou de diffusion mettant en oeuvre une modulation de type OFDM/OQAM, la mise en trame (appelée "burst" selon la norme Hiperlan/2) résultant de l'estimation de canal particulière décrite ci-dessus comprend donc :

- un préambule, dont la partie dédiée à l'estimation du canal a une structure similaire à celle qui est illustrée sur les figures 2 et 3 ;
- une partie dédiée à l'information utile (appelée "payload" selon la norme Hiperlan/2) constituée d'un ensemble de symboles OFDM/OQAM transportant l'information utile, pour lesquels la récupération des données utilise l'estimation du canal faite au niveau du préambule.

De manière évidente, la longueur totale de trame sera choisie de manière à respecter l'hypothèse d'invariance du canal sur la trame.

### *ANNEXE 1*

**RAPPELS SUR LA FONCTION D'AMBIGUÏTÉ**

1. DEFINITIONS

Soit une fonction x(t) et sa transformée de Fourier X(f). On peut lui associer ses produits temporel et fréquentiel définis respectivement par:

$$\gamma_x(t,\tau) = x(t+\tau/2)\, x^*(t-\tau/2)$$

$$\Gamma_x(f,\nu) = X(f+\nu/2)\, X^*(f-\nu/2)$$

La transformée de Wigner-Ville et la fonction d'ambiguïté de x sont alors données par:

$$\begin{cases} W_x(t,f) = \int \gamma_x(t,\tau)e^{-2i\pi f\tau}d\tau = \int \Gamma_x(f,v)e^{2i\pi vt}dv \\ A_x(\tau,v) = \int \gamma_x(t,\tau)e^{-2i\pi vt}dt = \int \Gamma_x(f,v)e^{2i\pi f\tau}df \end{cases}$$

## 2. PROPRIETES DE SYMETRIE DE LA FONCTION D'AMBIGUÏTE

Soit une fonction x(t). On notera respectivement par x⁻ et $\tilde{x}$ les fonctions définies de la manière suivante:

$$\begin{cases} x^-(t) = x(-t) \\ \tilde{x}(t) = x^*(-t) \end{cases}$$

On a alors les relations:

$$A_x(\tau,v) = \int e^{-2i\pi vt}x(t+\tau/2)\,x^*(t-\tau/2)dt \text{ soit,}$$

en posant u = -t :

$$A_x(\tau,v) = \int e^{2i\pi vu}x(-u+\tau/2)x^*(-u-\tau/2)du =$$

$$\int e^{2i\pi vu}x(u-\tau/2)x^*(u+\tau/2)du = A_x^*(\tau,v)$$

On en conclut en particulier que si une fonction x est paire, c'est à dire que x = x⁻, sa fonction d'ambiguïté est réelle. Par ailleurs, on notera la relation suivante:

$$A_{x^-}(\tau,v) = \int e^{-2i\pi vt}x^*(u+\tau/2)x(u-\tau/2)du = A_x(-\tau,v)$$

En combinant ces deux relations, on obtient:

$$A_{\tilde{x}}(\tau,v) = A_x(\tau,-v)$$

## 1. FONCTION D'AMBIGUÏTE ET TRANSFORMEE DE FOURIER

On peut réécrire la définition de la fonction d'ambiguïté de la façon suivante:

$$A_x(\tau,v) = \int \Gamma_x(f,v)e^{2i\pi f\tau}df = \int \gamma_x(f,v)e^{2i\pi f\tau}df = A_{x}(v,-\tau)$$

ou encore $A_x(\tau,v) = A_x(-v,\tau)$

## 2. FONCTION d'ambiguïté ET TRANSLATION TEMPS FREQUENCE

Considérons une fonction translatée d'une fonction prototype x(t) quelconque, soit:

$$x_k = e^{i\varphi_k}e^{2i\pi v_k t}x(t-\tau_k)$$

La fonction d'ambiguïté associée s'écrit:

$$A_{x_k}(\tau,\nu) = \int e^{-2i\pi\nu t}e^{i\varphi_k}e^{2i\pi\nu_k(t+\tau/2)}x(t-\tau_k+\tau/2)e^{-i\varphi_k}e^{-2i\pi\nu_k(t-\tau/2)}x^*(t-\tau_k-\tau/2)dt =$$
$$\int e^{-2i\pi\nu t}e^{2i\pi\nu_k\tau}x(t-\tau_k+\tau/2)x^*(t-\tau_k-\tau/2)dt$$

soit, en posant $u = t - \tau_k$ :

$$A_{x_k}(\tau,\nu) = e^{2i\pi(\nu_k\tau-\nu\tau_k)}\int e^{-2i\pi\nu t}x(u+\tau/2)x^*(u-\tau/2)du = e^{2i\pi(\nu_k\tau-\nu\tau_k)}A_x(\tau,\nu)$$

5. ORTHOGONALITE ET FONCTION D'AMBIGUÏTE

Cas général

On considère deux fonctions translatées d'une même fonction x(t), soit:

$$x_k = e^{i\varphi_k}e^{2i\pi\nu_k t}x(t-\tau_k)$$

$$x_{k'} = e^{i\varphi_{k'}}e^{2i\pi\nu_{k'}t}x(t-\tau_{k'})$$

Le produit scalaire de ces deux fonctions s'écrit :

$$\langle x_k | x_{k'} \rangle = e^{i(\varphi_k-\varphi_{k'})}\int e^{2i\pi(\nu_k-\nu_{k'})t}x(t-\tau_k)x^*(t-\tau_{k'})dt$$

soit, en posant $u = t - 1(\tau_k + \tau_k)/2$ :

$$\langle x_k | x_{k'} \rangle = e^{i(\varphi_k-\varphi_{k'})}e^{2i\pi(\nu_k-\nu_{k'})(\tau_k+\tau_{k'})}\int e^{2i\pi(\nu_k-\nu_{k'})u}x(u+(\tau_{k'}-\tau_k)/2)x^*(u-(\tau_{k'}-\tau_k)/2)du$$
$$= e^{i(\varphi_k-\varphi_{k'})}e^{2i\pi(\nu_k-\nu_{k'})(\tau_k+\tau_{k'})}A_x(\tau_{k'}-\tau_k,\nu_{k'}-\nu_k)$$

**Revendications**

**1.** Procédé de transmission d'un signal multiporteuse formé d'une succession temporelle de symboles constitués d'un ensemble d'éléments de données, chacun desdits éléments de données modulant une fréquence porteuse dudit signal, lesdits symboles étant organisés en trames successives comprenant chacune une pluralité de symboles, une desdites fréquences porteuses modulée, à un instant donné, par un desdits éléments de données, étant appelée porteuse,
au moins certaines desdites trames comprenant un préambule formé d'au moins trois symboles de référence comprenant au moins un symbole précédent, un symbole central et au moins un symbole suivant, formés intégralement d'éléments de données de référence connus d'au moins un récepteur,
**caractérisé en ce que**, pour au moins un élément de données de référence dudit symbole central, ledit procédé :

- détermine un ensemble de porteuses voisines dudit élément de données de référence du symbole central dans l'espace temps fréquence, et appartenant audit préambule, et
- impose au moins une contrainte sur la valeur d'au moins un desdits éléments de données de référence modulant les porteuses dudit ensemble, en fonction des autres éléments de données de référence modulant les porteuses dudit ensemble,

de façon à réduire, à la réception, au moins un terme d'interférence affectant ledit élément de données de référence du symbole central.

2. Procédé de transmission d'un signal selon la revendication 1, **caractérisé en ce que** chacune desdites trames comprend un préambule.

3. Procédé de transmission d'un signal selon l'une quelconque des revendications 1 et 2, **caractérisé en ce que** ledit signal est de type OFDM/OQAM.

4. Procédé de transmission d'un signal selon l'une quelconque des revendications 1 à 3, **caractérisé en ce que** ledit préambule est placé au début desdites trames.

5. Procédé de transmission d'un signal selon l'une quelconque des revendications 1 à 4, **caractérisé en ce que** ledit signal est de la forme $s(t) = \sum_{n} \sum_{m=0}^{M-1} a_{m,n} e^{i\varphi_{m,n}} e^{2i\pi m \nu_0 t} g(t - n\tau_0)$, où g est une fonction prototype prédéterminée telle que lesdites porteuses sont orthogonales, et où les termes $a_{m,n}$ sont réels et représentent lesdits éléments de données, $\tau_0$ étant la durée d'un desdits symboles et $\nu_0$ l'espacement entre lesdites fréquences porteuses, avec $1/(\nu_0\tau_0)=2$,

et où $\varphi_{m,n}=(\pi/2)^*(m+n)$, m et n étant caractéristiques de la position, respectivement dans l'espace fréquence et dans l'espace temps, de la porteuse portant l'élément de données $a_{m,n}$ et M étant le nombre de porteuses d'un symbole de référence dudit signal.

6. Procédé de transmission d'un signal selon la revendication 5, **caractérisé en ce que** ladite fonction g est une fonction paire, réelle et isotrope, vérifiant les relations suivantes :

$$\alpha_1^{\cdot} = A_g(0, \nu_0) = A_g(0, -\nu_0) = \alpha_2 = A_g(\tau_0, 0) = A_g(-\tau_0, 0)$$

et $A_g(2m\nu_0, 2n\tau_0) = \delta_{m,0} \cdot \delta_{n,0}$ pour tous les couples (m,n) d'entiers, où $A_g$ est la fonction d'ambiguïté de ladite fonction g.

7. Procédé de transmission d'un signal selon l'une quelconque des revendications 5 et 6, **caractérisé en ce que** ladite fonction g est la fonction Iota.

8. Procédé de transmission d'un signal selon l'une quelconque des revendications 1 à 7, **caractérisé en ce que** lesdits symboles de référence comprennent au moins deux porteuses modulées supplémentaires par rapport aux autres symboles formant ledit signal, lesdites porteuses modulées supplémentaires étant placées sur les bords du spectre dudit signal.

9. Procédé de transmission d'un signal selon l'une quelconque des revendications 1 à 8, **caractérisé en ce que** lesdits éléments de données de référence modulant les porteuses dudit ensemble respectent les contraintes suivantes :

$$(a_{m_0-1, n_0} - a_{m_0+1, n_0})(-1)^{n_0} + a_{m_0, n_0-1} - a_{m_0, n_0+1} = 0$$

et $a_{m_0-1, n_0-1} + a_{m_0+1, n_0} + a_{m_0+1, n_0-1} + a_{m_0-1, n_0+1} = 0$
où $n_0$ est caractéristique dudit symbole central et où $m_0 \in [0, M-1]$, M étant le nombre de porteuses d'un symbole de référence dudit signal.

10. Procédé de transmission d'un signal selon la revendication 9, **caractérisé en ce que**, la position dudit symbole central dans l'espace temps étant **caractérisée par** l'indice $n_0$, ledit symbole central est constitué d'un motif régulier comprenant une alternance de deux porteuses portant un élément de données de valeur $+\sqrt{e}$ et de deux porteuses portant un élément de données de valeur $-\sqrt{e}$ , et en ce que, $n_0$ étant pair (respectivement impair), ledit symbole précédent est constitué d'un motif régulier obtenu en opérant un décalage d'un pas vers la gauche (respectivement la droite) dans l'espace fréquence dudit motif régulier constituant ledit symbole central, et ledit symbole suivant est constitué d'un motif régulier obtenu en opérant un décalage d'un pas vers la droite (respectivement la gauche) dans l'espace fréquence dudit motif régulier constituant ledit symbole central.

11. Procédé de transmission d'un signal selon l'une quelconque des revendications 1 à 10, **caractérisé en ce que**, ledit préambule étant constitué d'au moins cinq symboles de référence, comprenant deux symboles précédents, un symbole central et deux symboles suivants, ladite contrainte est établie entre les éléments de données de référence constituant ledit symbole central et lesdits deux symboles précédents et deux symboles suivants, de façon à annuler, pour ledit symbole central, l'interférence intrinsèque due auxdits deux symboles précédents et auxdits deux symboles suivants.

12. Procédé de transmission d'un signal selon la revendication 11, **caractérisé en ce que** ledit signal respecte la contrainte suivante :

$$C^{1\&2}_{m_0,n_0} = \sum_{(m,n)\in Couronne^{1\&2}_{m_0,n_0}} a_{m,n}\, i^{(m-m_0)+(n-n_0)+(m-m_0)(n+n_0)} A_g\big((n_0-n)\tau_0,(m_0-m)v_0\big) = 0$$

avec

$$Couronne^{1\&2}_{m_0,n_0} = \Big\{(m,n)\, tel que\, ((m-m_0),(n-n_0))\in\big\{-2,-1,0,1,2\big\}^2\, et\,(m,n)\neq(m_0,n_0)\Big\}$$

où $m_0 \in [0, M\text{-}1]$, M étant le nombre de porteuses d'un symbole dudit signal.

13. Procédé de transmission d'un signal selon l'une quelconque des revendications 11 et 12, **caractérisé en ce que**, la position dudit symbole central dans l'espace temps étant **caractérisée par** l'indice $n_0$, ledit symbole central est constitué d'un motif régulier comprenant une alternance de deux porteuses portant un élément de données de valeur $+\sqrt{e}$ et de deux porteuses portant un élément de données de valeur $-\sqrt{e}$ ,
et en ce que, $n_0$ étant pair (respectivement impair), ledit symbole d'indice $n_0$-1 est constitué d'un motif régulier obtenu en opérant un décalage d'un pas vers la gauche (respectivement la droite) dans l'espace fréquence dudit motif régulier constituant ledit symbole central, et ledit symbole d'indice $n_0$+1 est constitué d'un motif régulier obtenu en opérant un décalage d'un pas vers la droite (respectivement la gauche) dans l'espace fréquence dudit motif régulier constituant ledit symbole central,
et en ce que, $n_0$ étant pair (respectivement impair), ledit symbole d'indice $n_0$-2 est constitué d'un motif régulier obtenu en opérant un décalage d'un pas vers la gauche (respectivement la droite) dans l'espace fréquence dudit motif régulier constituant ledit symbole d'indice $n_0$-1, et ledit symbole d'indice $n_0$+2 est constitué d'un motif régulier obtenu en opérant un décalage d'un pas vers la droite (respectivement la gauche) dans l'espace fréquence dudit motif régulier constituant ledit symbole d'indice $n_0$+1.

14. Signal multiporteuse émis selon le procédé de transmission de la revendication 1,
**caractérisé en ce que**, pour au moins un élément de données de référence dudit symbole central,
la valeur d'au moins un desdits éléments de données de référence, modulant les porteuses d'un ensemble de porteuses voisines dudit élément de données de référence du symbole central dans l'espace temps fréquence et appartenant audit préambule, respecte au moins une contrainte imposée en fonction des autres éléments de données de référence modulant les porteuses dudit ensemble,
de façon à réduire, à la réception, au moins un terme d'interférence affectant ledit élément de données de référence du symbole central.

**15.** Procédé de réception d'un signal multiporteuse formé d'une succession temporelle de symboles constitués d'un ensemble d'éléments de données, chacun desdits éléments de données modulant une fréquence porteuse dudit signal, lesdits symboles étant organisés en trames successives comprenant chacune une pluralité de symboles, une desdites fréquences porteuses modulée, à un instant donné, par un desdits éléments de données, étant appelée porteuse,

au moins certaines desdites trames comprenant un préambule formé d'au moins trois symboles de référence comprenant au moins un symbole précédent, un symbole central et au moins un symbole suivant, formés intégralement d'éléments de données de référence connus d'au moins un récepteur

**caractérisé en ce que** ledit procédé met en oeuvre les étapes suivantes :

- une étape d'estimation de la fonction de transfert d'un canal de transmission, comprenant une sous-étape de détermination de la valeur d'au moins certains coefficients de ladite fonction de transfert, mettant en oeuvre, pour au moins certains desdits symboles de référence d'une trame, une division de la valeur desdits éléments de référence en réception par la valeur desdits éléments de référence connue à l'émission, de manière à obtenir une bonne estimation dudit canal,

ladite sous-étape de détermination tenant compte d'au moins une contrainte sur la valeur d'au moins un desdits éléments de données de référence modulant les porteuses d'un ensemble de porteuses, imposée en émission, en fonction des autres éléments de données de référence modulant les porteuses dudit ensemble de porteuses, de façon à réduire, à la réception, au moins un terme d'interférence affectant ledit élément de données de référence du symbole central.

ledit ensemble étant formé des porteuses voisines d'un élément de données de référence du symbole central dans l'espace temps fréquence, et appartenant audit préambule ;

- une étape de démodulation et/ou de décodage des symboles de ladite trame en fonction de l'estimation de ladite fonction de transfert.

**16.** Procédé de réception selon la revendication 15, **caractérisé en ce que**, dans ladite sous-étape de détermination, on tient compte, pour chacun des éléments de données de référence dudit symbole central :

- des porteuses voisines définissant une couronne autour dudit élément de données de référence du symbole central lorsqu'une telle couronne existe ;
- pour les éléments de données de référence des bords du spectre dudit signal, lorsque ladite couronne n'est pas complète, les coefficients de ladite fonction de transfert sont déterminés par extrapolation.

**17.** Récepteur d'un signal multiporteuse formé d'une succession temporelle de symboles constitués d'un ensemble d'éléments de données, chacun desdits éléments de données modulant une fréquence porteuse dudit signal, lesdits symboles étant organisés en trames successives comprenant chacune une pluralité de symboles,

une desdites fréquences porteuses modulée, à un instant donné, par un desdits éléments de données, étant appelée porteuse,

au moins certaines desdites trames comprenant un préambule formé d'au moins trois symboles de référence comprenant au moins un symbole précédent, un symbole central et au moins un symbole suivant, formés intégralement d'éléments de données de référence connus d'au moins un récepteur,

**caractérisé en ce que** ledit récepteur comprend :

- des moyens d'estimation de la fonction de transfert d'un canal de transmission, comprenant des moyens de détermination de la valeur d'au moins certains coefficients de ladite fonction de transfert, mettant en oeuvre, pour au moins certains desdits symboles de référence d'une trame, une division de la valeur desdits éléments de référence en réception par la valeur desdits éléments de référence connue à l'émission, de manière à obtenir une bonne estimation dudit canal,

lesdits moyens de détermination tenant compte d'au moins une contrainte sur la valeur d'au moins un desdits éléments de données de référence modulant les porteuses d'un ensemble de porteuses, imposée en émission, en fonction des autres éléments de données de référence modulant les porteuses dudit ensemble de porteuses, de façon à réduire, à la réception, au moins un terme d'interférence affectant ledit élément de données de référence du symbole central.

ledit ensemble étant formé des porteuses voisines d'un élément de données de référence du symbole central dans l'espace temps fréquence, et appartenant audit préambule ;

- des moyens de démodulation et/ou de décodage des symboles de ladite trame en fonction de l'estimation de ladite fonction de transfert.

**18.** Dispositif d'émission d'un signal multiporteuse formé d'une succession temporelle de symboles constitués d'un ensemble d'éléments de données, chacun desdits éléments de données modulant une fréquence porteuse dudit signal, lesdits symboles étant organisés en trames successives comprenant chacune une pluralité de symboles, une desdites fréquences porteuses modulée, à un instant donné, par un desdits éléments de données, étant appelée porteuse,

au moins certaines desdites trames comprenant un préambule formé d'au moins trois symboles de référence comprenant au moins un symbole précédent, un symbole central et au moins un symbole suivant, formés intégralement d'éléments de données de référence connus d'au moins un récepteur,

**caractérisé en ce que** ledit dispositif comprend :

- des moyens pour déterminer un ensemble de porteuses voisines d'un élément de données de référence du symbole central dans l'espace temps fréquence, et appartenant audit préambule, et
- des moyens pour imposer au moins une contrainte sur la valeur d'au moins un desdits éléments de données de référence modulant les porteuses dudit ensemble, en fonction des autres éléments de données de référence modulant les porteuses dudit ensemble,

de façon à réduire, à la réception, au moins un terme d'interférence affectant ledit élément de données de référence du symbole central.

**Patentansprüche**

**1.** Verfahren zur Übertragung eines Mehrträgersignals, das aus einer zeitlichen Folge von Symbolen besteht, die aus einer Menge von Datenelementen bestehen, wobei jedes der Datenelemente eine Trägerfrequenz des Signals moduliert, wobei die Symbole in aufeinanderfolgenden Rahmen organisiert sind, die jeweils mehrere Symbole aufweisen,

wobei eine der Trägerfrequenzen, die an einem gegebenen Zeitpunkt durch eines der Datenelemente moduliert wird, Träger genannt wird,

mindestens bestimmte der Rahmen eine Präambel aufweisen, die aus mindestens drei Referenzsymbolen gebildet wird, die mindestens ein vorhergehendes Symbol, ein mittleres Symbol und mindestens ein folgendes Symbol aufweisen, die vollständig aus Referenzdatenelementen gebildet sind, die mindestens einem Empfänger bekannt sind,

**dadurch gekennzeichnet, dass** das Verfahren für mindestens ein Referenzdatenelement des mittleren Symbols:

- eine Menge von Trägern bestimmt, die dem Referenzdatenelement des mittleren Symbols im Zeit-Frequenz-Raum benachbart sind und zu der Präambel gehören, und
- dem Wert von mindestens einem der Referenzdatenelemente, die die Träger der Menge modulieren, mindestens eine Bedingung in Abhängigkeit von den anderen Referenzdatenelementen auferlegt, die die Träger der Menge modulieren,

derart, dass beim Empfang mindestens ein Interferenzterm, der das Referenzdatenelement des mittleren Symbols beeinträchtigt, verringert wird.

**2.** Verfahren zur Übertragung eines Signals nach Anspruch 1, **dadurch gekennzeichnet, dass** jeder der Rahmen eine Präambel aufweist.

**3.** Verfahren zur Übertragung eines Signals nach einem der Ansprüche 1 und 2, **dadurch gekennzeichnet, dass** das Signal vom Typ OFDM/OQAM ist.

**4.** Verfahren zur Übertragung eines Signals nach einem der Ansprüche 1 bis 3, **dadurch gekennzeichnet, dass** die Präambel am Anfang der Rahmen untergebracht ist.

**5.** Verfahren zur Übertragung eines Signals nach einem der Ansprüche 1 bis 4, **dadurch gekennzeichnet, dass** das Signal die Form

$$s(t) = \sum_{n} \sum_{m=0}^{M-1} a_{m,n} e^{i\varphi_{m,n}} e^{2i\pi m v_0 t} g(t - n\tau_0)$$

aufweist, wo g eine vorbestimmte Prototypenfunktion ist, derart, dass die Träger orthogonal sind, und wo die Terme $a_{m,n}$ reell sind und die Datenelemente darstellen, $\tau_0$ die Dauer eines der Symbole ist und $v_0$ der Abstand zwischen den Trägerfrequenzen ist, mit $1/(v_0\tau_0)=2$,

und wo $\varphi_{m,n} = (\pi/2)*(m+n)$, wo m und n für die Position des Trägers, der das Datenelement $a_{m,n}$ trägt, im Frequenzraum beziehungsweise im Zeitraum charakteristisch sind und M die Anzahl der Träger eines Referenzsymbols des Signals ist.

6. Verfahren zur Übertragung eines Signals nach Anspruch 5, **dadurch gekennzeichnet, dass** die Funktion g eine gerade, reelle und isotrope Funktion ist, die die folgenden Beziehungen:

$$\alpha_1 = A_g(0, v_0) = A_g(0, -v_0) = \alpha_2 = A_g(\tau_0, 0) = A_g(-\tau_0, 0)$$

und $A_g(2mv_0, 2n\tau_0) = \delta_{m,0}.\delta_{n,0}$ für alle Ganzzahlpaare (m, n) erfüllt,
wo $A_g$ die Vieldeutigkeitsfunktion der Funktion g ist.

7. Verfahren zur Übertragung eines Signals nach einem der Ansprüche 5 und 6, **dadurch gekennzeichnet, dass** die Funktion g die Iota-Funktion ist.

8. Verfahren zur Übertragung eines Signals nach einem der Ansprüche 1 bis 7, **dadurch gekennzeichnet, dass** die Referenzsymbole im Vergleich zu anderen Symbolen, die das Signal bilden, mindestens zwei zusätzliche modulierte Träger aufweisen, wobei die zusätzlichen modulierten Träger an den Rändern des Spektrums des Signals untergebracht sind.

9. Verfahren zur Übertragung eines Signals nach einem der Ansprüche 1 bis 8, **dadurch gekennzeichnet, dass** die Referenzdatenelemente, die die Träger der Menge modulieren, die folgenden Bedingungen einhalten:

$$(a_{m_0-1,n_0} - a_{m_0+1,n_0})(-1)^{n_0} + a_{m_0,n_0-1} - a_{m_0,n_0+1} = 0$$

und $a_{m_0-1, n_0-1} + a_{m_0 + 1, n_0 +1} + a_{m_0 + 1, n_0} + a_{m_0-1, n_0+1} = 0$
wo $n_0$ für das mittlere Symbol charakteristisch ist und wo $m_0$ E [0, $M$ - 1], wobei M die Anzahl der Träger eines Referenzsymbols des Signals ist.

10. Verfahren zur Übertragung eines Signals nach Anspruch 9, **dadurch gekennzeichnet, dass** die Position des mittleren Symbols im Zeitraum durch den Index $n_0$ gekennzeichnet ist, wobei das mittlere Symbol aus einem gleichmäßigen Muster gebildet wird, das einen Wechsel von zwei Trägern, die ein Datenelement mit dem Wert $+\sqrt{e}$ tragen, und von zwei Trägern aufweist, die ein Datenelement mit dem Wert $-\sqrt{e}$ tragen,

und dadurch, dass, wenn $n_0$ gerade (beziehungsweise ungerade) ist, das vorhergehende Symbol aus einem gleichmäßigen Muster gebildet wird, das durch Ausführen eines Versatzes von einem Schritt nach links (beziehungsweise nach rechts) im Frequenzraum des gleichmäßigen Musters erhalten wird, das das mittlere Symbol bildet, und das folgende Symbol aus einem gleichmäßigen Muster gebildet wird, das durch Ausführen eines Versatzes von einem Schritt nach rechts (beziehungsweise nach links) im Frequenzraum des gleichmäßigen Musters erhalten wird, das das mittlere Symbol bildet.

11. Verfahren zur Übertragung eines Signals nach einem der Ansprüche 1 bis 10, **dadurch gekennzeichnet, dass** die Präambel aus mindestens fünf Referenzsymbolen gebildet wird, die zwei vorhergehende Symbole, ein mittleres Symbol und zwei folgende Symbole aufweisen, wobei die Bedingung zwischen den Referenzdatenelementen, die das mittlere Symbol bilden, und den zwei vorhergehenden Symbolen und zwei folgenden Symbolen aufgestellt wird, derart, dass für das mittlere Symbol die Eigeninterferenz aufgrund der zwei vorhergehenden und der zwei folgenden Symbole aufgehoben wird.

12. Verfahren zur Übertragung eines Signals nach Anspruch 11, **dadurch gekennzeichnet**, das das Signal die folgende Bedingung einhält:

$$C_{m_0,n_0}^{1\&2} = \sum_{(m,n)\in Ring_{m_0,n_0}^{1\&2}} a_{m,n} i^{(m-m_0)+(n-n_0)+(m-m_0)(n+n_0)} A_g\left((n_0 - n)\tau_0, (m_0 - m)v_0\right) = 0$$

mit

$$Ring_{m_0,n_0}^{1\&2} = \{(m,n) \ derart, dass \ ((m-m_0), \ (n-n_0)) \in \{-2,-1,0,1,2\}^2 \ und \ (m,n) \neq (m_0, n_0)\},$$

wo $m_0 \in [0, M-1]$, wobei M die Anzahl der Träger eines Symbols des Signals ist.

13. Verfahren zur Übertragung eines Signals nach einem der Ansprüche 11 und 12, **dadurch gekennzeichnet, dass** die Position des mittleren Symbols im Zeitraum durch den Index $n_0$ gekennzeichnet ist, wobei das mittlere Symbol aus einem gleichmäßigen Muster gebildet ist, das einen Wechsel von zwei Trägern, die ein Datenelement mit dem Wert $+\sqrt{e}$ tragen, und zwei Trägern umfasst, die ein Datenelement mit dem Wert $-\sqrt{e}$ tragen,
und dadurch, dass, wenn $n_0$ gerade (beziehungsweise ungerade) ist, das Symbol mit dem Index $n_0$-1 aus einem gleichmäßigen Muster gebildet wird, das durch Ausführen eines Versatzes von einem Schritt nach links (beziehungsweise nach rechts) im Frequenzraum des gleichmäßigen Musters erhalten wird, das das mittlere Symbol bildet, und das Symbol mit dem Index $n_0$+1 aus einem gleichmäßigen Muster gebildet wird, das durch Ausführen eines Versatzes von einem Schritt nach rechts (beziehungsweise nach links) im Frequenzraum des gleichmäßigen Musters erhalten wird, das das mittlere Symbol bildet,
und dadurch, dass, wenn $n_0$ gerade (beziehungsweise ungerade) ist, das Symbol mit dem Index $n_0$-2 aus einem gleichmäßigen Muster gebildet wird, das durch Ausführen eines Versatzes von einem Schritt nach links (beziehungsweise nach rechts) im Frequenzraum des gleichmäßigen Musters erhalten wird, das das Symbol mit dem Index $n_0$-1 bildet, und das Symbol mit dem Index $n_0$+2 aus einem gleichmäßigen Muster gebildet wird, das durch Ausführen eines Versatzes von einem Schritt nach rechts (beziehungsweise nach links) im Frequenzraum des gleichmäßigen Musters erhalten wird, das das Symbol mit dem Index $n_0$+1 bildet.

14. Mehrträgersignal, das nach dem Übertragungsverfahren nach Anspruch 1 gesendet wird, **dadurch gekennzeichnet, dass**, für mindestens ein Referenzdatenelement des mittleren Symbols, der Wert von mindestens einem der Referenzdatenelemente, die die Träger von einer Menge von Trägern modulieren, die dem Referenzdatenelement des mittleren Symbols im Zeit-Frequenz-Raum benachbart sind und zu der Präambel gehören, mindestens eine Beschränkung einhält, die in Abhängigkeit von den anderen Referenzdatenelementen auferlegt wird, die die Träger der Menge modulieren, derart, dass beim Empfang mindestens ein Interferenzterm, der das Referenzdatenelement des mittleren Symbols beeinträchtigt, verringert wird.

15. Verfahren zum Empfangen eines Mehrträgersignals, das aus einer zeitlichen Folge von Symbolen gebildet wird, die aus einer Menge von Datenelementen gebildet werden, wobei jedes der Datenelemente eine Trägerfrequenz des Signals moduliert, wobei die Symbole in aufeinanderfolgenden Rahmen organisiert werden, die jeweils mehrere Symbole umfassen,
eine der Trägerfrequenzen, die zu einem gegebenen Zeitpunkt durch eines der Datenelemente moduliert wird, Träger genannt wird,
mindestens bestimmte der Rahmen eine Präambel aufweisen, die aus mindestens drei Referenzsymbolen gebildet ist, die mindestens ein vorhergehendes Symbol, ein mittleres Symbol und mindestens ein folgendes Symbol aufweisen, die vollständig aus Referenzdatenelementen gebildet sind, die mindestens einem Empfänger bekannt sind,

**dadurch gekennzeichnet, dass** das Verfahren die folgenden Schritte durchführt:

- einen Schritt zum Schätzen der Übertragungsfunktion eines Übertragungskanals, der einen Teilschritt zum Bestimmen des Werts von mindestens bestimmten Koeffizienten der Übertragungsfunktion umfasst, der für mindestens bestimmte der Referenzsymbole eines Rahmens eine Division des Werts der empfangenen Referenzelemente durch den Wert der Referenzelemente durchführt, der beim Senden bekannt ist, derart, dass eine gute Schätzung des Kanals erhalten wird,

wobei der Teilschritt zum Bestimmen mindestens eine Beschränkung auf dem Wert von mindestens einem der Referenzdatenelemente berücksichtigt, die die Träger von einer Menge von Trägern modulieren, die beim Senden in Abhängigkeit von den anderen Referenzdatenelementen auferlegt wurde, die die Träger der Menge von Trägern modulieren, derart, dass beim Empfang mindestens ein Interferenzterm, der das Referenzdatenelement des mittleren Symbols beeinträchtigt, verringert wird,
wobei die Menge aus Trägern gebildet wird, die einem Referenzdatenelement des mittleren Symbols im Zeit-Frequenz-Raum benachbart sind, und zu der Präambel gehören;

- einen Schritt zum Demodulieren und/oder Decodieren der Symbole des Rahmens in Abhängigkeit von der Schätzung der Übertragungsfunktion.

16. Empfangsverfahren nach Anspruch 15, **dadurch gekennzeichnet, dass** in dem Teilschritt zum Bestimmen für jedes der Referenzdatenelemente des mittleren Symbols Folgendes berücksichtigt wird:

- benachbarte Träger, die einen Ring um das Referenzdatenelement des mittleren Symbols definieren, wenn ein solcher Ring vorhanden ist;
- für die Referenzdatenelemente der Ränder des Spektrums des Signals, wenn dieser Ring nicht vollständig ist, die Koeffizienten der Übertragungsfunktion, die durch Extrapolation bestimmt werden.

17. Empfänger eines Mehrträgersignals, das aus einer zeitlichen Folge von Symbolen gebildet ist, die aus einer Menge von Datenelementen gebildet sind, wobei jedes der Datenelemente eine Trägerfrequenz des Signals moduliert, wobei die Symbole in aufeinanderfolgenden Rahmen organisiert sind, die jeweils mehrere Symbole aufweisen, eine der Trägerfrequenzen, die an einem gegebenen Zeitpunkt durch eines der Datenelemente moduliert wird, Träger genannt wird, mindestens bestimmte der Rahmen eine Präambel aufweisen, die aus mindestens drei Referenzsymbolen gebildet ist, die mindestens ein vorhergehendes Symbol, ein mittleres Symbol und mindestens ein folgendes Symbol umfassen, die vollständig aus Referenzdatenelementen gebildet sind, die mindestens einem Empfänger bekannt sind, **dadurch gekennzeichnet, dass** der Empfänger Folgendes umfasst:

- Mittel zum Schätzen der Übertragungsfunktion eines Übertragungskanals, die Mittel zur Bestimmung des Werts von mindestens bestimmten Koeffizienten der Übertragungsfunktion umfassen, die für mindestens bestimmte der Referenzsymbole eines Rahmens eine Division des Werts der empfangenen Referenzelemente durch den Wert der Referenzelemente durchführen, der bei der Sendung bekannt ist, derart, dass eine gute Schätzung des Kanals erhalten wird,

wobei die Bestimmungsmittel mindestens eine Beschränkung auf dem Wert von mindestens einem der Referenzdatenelemente berücksichtigen, die die Träger von einer Menge von Trägern modulieren, die beim Senden in Abhängigkeit von den anderen Referenzdatenelementen auferlegt wurde, die die Träger der Menge von Trägern modulieren, derart, dass beim Empfang mindestens ein Interferenzterm, der das Referenzdatenelement des mittleren Symbols beeinträchtigt, verringert wird,
wobei die Menge aus Trägern gebildet wird, die einem Referenzdatenelement des mittleren Symbols im Zeit-Frequenz-Raum benachbart sind und zu der Präambel gehören;

- Mittel zum Demodulieren und/oder Decodieren der Symbole des Rahmens in Abhängigkeit von der Schätzung der Übertragungsfunktion.

18. Vorrichtung zum Senden eines Mehrträgersignals, das aus einer zeitlichen Folge von Symbolen gebildet wird, die aus einer Menge von Datenelementen gebildet sind, wobei jedes der Datenelemente eine Trägerfrequenz des Signals moduliert, wobei die Symbole in aufeinanderfolgenden Rahmen organisiert sind, die jeweils mehrere Symbole umfassen,

eine der Trägerfrequenzen, die zu einem gegebenen Zeitpunkt durch eines der Datenelemente moduliert wird, Träger genannt wird,

mindestens bestimmte der Rahmen eine Präambel aufweisen, die aus mindestens drei Referenzsymbolen gebildet ist, die mindestens ein vorhergehendes Symbol, ein mittleres Symbol und mindestens ein folgendes Symbol aufweisen, die vollständig aus Referenzdatenelementen gebildet sind, die mindestens einem Empfänger bekannt sind, **dadurch gekennzeichnet, dass** die Vorrichtung Folgendes umfasst:

- Mittel zum Bestimmen einer Menge von Trägern, die einem Referenzdatenelement des mittleren Symbols im Zeit-Frequenz-Raum benachbart sind und zur Präambel gehören, und
- Mittel zum Auferlegen mindestens einer Bedingung für den Wert von mindestens einem der Referenzdatenelemente, die die Träger der Menge modulieren, in Abhängigkeit von den anderen Referenzdatenelementen, die die Träger der Menge modulieren, derart, dass beim Empfang mindestens ein Interferenzterm, der das Referenzdatenelement des mittleren Symbols beeinträchtigt, verringert wird.

**Claims**

1. Method for transmitting a multicarrier signal formed by a temporal succession of symbols made up of a set of data elements, each of said data elements modulating a carrier frequency for said signal, said symbols being organized into successive frames each comprising a plurality of symbols,
   one of said carrier frequencies, which has been modulated, at a given instant, by one of said data elements, being called a carrier,
   at least some of said frames comprising a preamble formed by at least three reference symbols comprising at least one precedent symbol, a central symbol and at least one subsequent symbol, which are fully formed by reference data elements that are known to at least one receiver, **characterized in that**, for at least one reference data element of said central symbol, said method:

   - determines a set of carriers adjacent to said reference data element of the central symbol in the time/frequency space, and belonging to said preamble, and
   - imposes at least one constraint on the value of at least one of said reference data elements modulating the carriers of said set, as a function of the other reference data elements modulating the carriers of said set,

   so as to reduce, on reception, at least one interference term affecting said reference data element of the central symbol.

2. Method for transmitting a signal according to Claim 1, **characterized in that** each of said frames comprises a preamble.

3. Method for transmitting a signal according to either of Claims 1 and 2, **characterized in that** said signal is of OFDM/OQAM type.

4. Method for transmitting a signal according to any one of Claims 1 to 3, **characterized in that** said preamble is placed at the beginning of said frames.

5. Method for transmitting a signal according to any one of Claims 1 to 4, **characterized in that** said signal is in the form

$$s(t) = \sum_{n} \sum_{m=0}^{M-1} a_{m,n} e^{i\varphi_{m,n}} e^{2i\pi m v_0 t} g(t - n\tau_0),$$

where g is a predetermined prototype function such that said carriers are orthogonal, and where the terms $a_{m,n}$ are real and represent said data elements, $\tau_0$ being the duration of one of said symbols and $v_0$ being the spacing between said carrier frequencies, with $1/(v_0\tau_0)=2$.
and where $\varphi_{m,n} = \pi/2*(m+n)$, m and n being characteristics of the position, in the frequency space and in the time space, respectively, of the carrier carrying the data element $a_{m,n}$ and M being the number of carriers of a reference symbol of said signal.

25

6. Method for transmitting a signal according to Claim 5, **characterized in that** said function g is an even, real and isotropic function, verifying the following relationships:

$$\alpha_1' = A_g(0, v_0) = A_g(0, -v_0) = \alpha_2 = A_g(\tau_0, 0) = A_g(-\tau_0, 0)$$

and $A_g(2mv_0, 2n\tau_0) = \delta_{m.0} \cdot \delta_{n.0}$ for all integer couples (m,n), where $A_g$ is the ambiguity function of said function g.

7. Method for transmitting a signal according to either of Claims 5 and 6, **characterized in that** said function g is the Iota function.

8. Method for transmitting a signal according to any one of Claims 1 to 7, **characterized in that** said reference symbols comprise at least two additional modulated carriers in relation to the other symbols forming said signal, said additional modulated carriers being placed at the edges of the spectrum of said signal.

9. Method for transmitting a signal according to any one of Claims 1 to 8, **characterized in that** said reference data elements modulating the carriers of said set observe the following constraints:

$$(a_{m_0-1,n_0} - a_{m_0+1,n_0})(-1)^{n_0} + a_{m_0,n_0-1} - a_{m_0,n_0+1} = 0$$

and $a_{m_0-1 n_0-1} + a_{m_0+1, n_0+1} + a_{m_0+1, n_0-1} + a_{m_0-1,n_0+1} = 0$
where $n_0$ is a feature of said central symbol and where $m_0 \in [0, M - 1]$, M being the number of carriers of a reference symbol of said signal.

10. Method for transmitting a signal according to Claim 9, **characterized in that** the position of said central symbol in the time space being **characterized by** the index $n_0$, said central symbol is made up of a regular pattern comprising an alternation of two carriers carrying a data $+\sqrt{e}$ element with the value and two carriers $-\sqrt{e}$, carrying a data element with the value
and in that $n_0$ being even (or odd), said precedent symbol is made up of a regular pattern obtained by making a shift of one step to the left (or to the right) in the frequency space of said regular pattern making up said central symbol, and said subsequent symbol is made up of a regular pattern obtained by making a shift of one step to the right (or to the left) in the frequency space of said regular pattern making up said central symbol.

11. Method for transmitting a signal according to any one of Claims 1 to 10, **characterized in that** said preamble being made up of at least five reference symbols, comprising two precedent symbols, a central symbol and two subsequent symbols, said constraint is set up between the reference data elements making up said central symbol and said two precedent symbols and two subsequent symbols, so as to cancel out, for said central symbol, the intrinsic interference owing to said two precedent symbols and to said two subsequent symbols.

12. Method for transmitting a signal according to Claim 11, **characterized in that** said signal observes the following constraint:

$$C_{n_0 n_0}^{1\&2} = \sum_{(m,n) \in Ring_{n_0 n_0}^{1\&2}} a_{m,n} i^{(m-m_0)+(n-n_0)+(m-m_0)(n+n_0)} A_g((n_0 - n)\tau_0, (m_0 - m)v_0) = 0$$

with

$$Ring_{m_0,n_0}^{1\&2} = \left\{ (m,n) \text{ such that } ((m-m_0),(n-n_0)) \in \{-2,-1,0,1,2\}^2 \text{ and } (m,n) \neq (m_0,n_0) \right\}$$

where $m_0 \in [O,M-1]$, M being the number of carriers of a symbol of said signal.

**13.** Method for transmitting a signal according to either of Claims 11 and 12, **characterized in that** the position of said central symbol in the time space being **characterized by** the index $n_0$, said central symbol is made up of a regular pattern comprising an alternation of two carriers carrying a data element with the value $+\sqrt{e}$ and two carriers carrying a data element with the value $-\sqrt{e}$,

and in that no being even (or odd), said symbol with the index $n_0-1$ is made up of a regular pattern obtained by making a shift of one step to the left (or to the right) in the frequency space of said regular pattern making up said central symbol, and said symbol with the index $n_0+1$ is made up of a regular pattern obtained by making a shift of one step to the right (or to the left) in the frequency space of said regular pattern making up said central symbol, and in that no being even (or odd), said symbol with the index $n_0-2$ is made up of a regular pattern obtained by making a shift of one step to the left (or to the right) in the frequency space of said regular pattern making up said symbol with the index $n_0-1$, and said symbol with the index $n_0+2$ is made up of a regular pattern obtained by making a shift of one step to the right (or to the left) in the frequency space of said regular pattern making up said symbol with the index $n_0+1$.

**14.** Multicarrier signal sent according to the method of transmission of Claim 1,
**characterized in that** for at least one reference data element of said central symbol,
the value of at least one of said reference data elements, modulating the carriers of a set of carriers adjacent to said reference data element of the central symbol in the time/frequency space and belonging to said preamble, observes at least one constraint imposed as a function of the other reference data elements modulating the carriers of said set, so as to reduce, on reception, at least one interference term affecting said reference data element of the central symbol.

**15.** Method for receiving a multicarrier signal formed by a temporal succession of symbols made up of a set of data elements, each of said data elements modulating a carrier frequency for said signal, said symbols being organized into successive frames each comprising a plurality of symbols,
one of said carrier frequencies, which has been modulated, at a given instant, by one of said data elements, being called a carrier,
at least some of said frames comprising a preamble formed by at least three reference symbols comprising at least one precedent symbol, a central symbol and at least one subsequent symbol, which are fully formed by reference data elements that are known to at least one receiver, **characterized in that** said method implements the following steps:

- a step of estimation of the transfer function of a transmission channel, comprising a substep of determination of the value of at least some coefficients of said transfer function, implementing, for at least some of said reference symbols of a frame, division of the value of said reference elements at reception by the value of said reference elements that is known on sending, so as to obtain a good estimate of said channel,
- said substep of determination taking account of at least one constraint on the value of at least one of said reference data elements modulating the carriers of a set of carriers, which constraint is imposed for sending, as a function of the other reference data elements modulating the carriers of said set of carriers, so as to reduce, on reception, at least one interference term affecting said reference data element of the central symbol, said set being formed by the carriers adjacent to a reference data element of the central symbol in the time/frequency space, and belonging to said preamble;
- a step of demodulation and/or decoding of the symbols of said frame as a function of the estimation of said transfer function.

**16.** Method of reception according to Claim 15, **characterized in that** in said determination substep, account is taken, for each of the reference data elements of said central symbol:

- of the adjacent carriers defining a ring around said reference data element of the central symbol when such a ring exists;
- for the reference data elements of the edges of the spectrum of said signal, when said ring is not complete, the coefficients of said transfer function are determined by extrapolation.

17. Receiver for a multicarrier signal formed by a temporal succession of symbols made up of a set of data elements, each of said data elements modulating a carrier frequency for said signal, said symbols being organized into successive frames each comprising a plurality of symbols,

one of said carrier frequencies, which has been modulated, at a given instant, by one of said data elements, being called a carrier,

at least some of said frames comprising a preamble formed by at least three reference symbols comprising at least one precedent symbol, a central symbol and at least one subsequent symbol, which are fully formed by reference data elements that are known to at least one receiver, **characterized in that** said receiver comprises:

- means for estimating the transfer function of a transmission channel, comprising means for determining the value of at least some coefficients of said transfer function, implementing, for at least some of said reference symbols of a frame, division of the value of said reference elements at reception by the value of said reference elements that is known on sending, so as to obtain a good estimate of said channel,

said means of determination taking account of at least one constraint on the value of at least one of said reference data elements modulating the carriers of a set of carriers, which constraint is imposed for sending, as a function of the other reference data elements modulating the carriers of said set of carriers, so as to reduce, on reception, at least one interference term affecting said reference data element of the central symbol, said set being formed by the carriers adjacent to a reference data element of the central symbol in the time/frequency space, and belonging to said preamble;

- means for demodulating and/or decoding the symbols of said frame as a function of the estimation of said transfer function.

18. Device for sending a multicarrier signal formed by a temporal succession of symbols made up of a set of data elements, each of said data elements modulating a carrier frequency for said signal, said symbols being organized into successive frames, each comprising a plurality of symbols, one of said carrier frequencies, which has been modulated, at a given instant, by one of said data elements, being called a carrier,

at least some of said frames comprising a preamble formed by at least three reference symbols comprising at least one precedent symbol, a central symbol and at least one subsequent symbol, which are fully formed by reference data elements that are known to at least one receiver, **characterized in that** said device comprises:

- means for determining a set of carriers adjacent to a reference data element of the central symbol in the time/frequency space, and belonging to said preamble, and

- means for imposing at least one constraint on the value of at least one of said reference data elements modulating the carriers of said set, as a function of the other reference data elements modulating the carriers of said set,

so as to reduce, on reception, at least one interference term affecting said reference data element of the central symbol.

Fig. 1

⊛ + √e   O - √e

Fig. 2

312

311

314

Préambule
1ère
couronne 31

Symbole $n_0$-3  ◉ ◉ ○ ○ ◉ ◉ ○ ○ ◉ ◉ ○ ○ ◉ ◉ ○

Symbole $n_0$-2  ◉ ○ ○ ◉ ◉ ○ ○ ◉ ◉ ○ ○ ◉ ◉ ○ ○

Symbole $n_0$-1  ○ ○ ◉ ◉ ○ ○ ◉ ◉ ○ ○ ◉ ◉ ○ ○ ◉

Symbole $n_0$  ○ ◉ ◉ ○ ○ ◉ ◉ ○ ○ ◉ ◉ ○ ○ ◉ ◉

Symbole $n_0$+1  ◉ ◉ ○ ○ ◉ ◉ ○ ○ ◉ ◉ ○ ○ ◉ ◉ ○

Symbole $n_0$+2  ◉ ○ ○ ◉ ◉ ○ ○ ◉ ◉ ○ ○ ◉ ◉ ○ ○

Symbole $n_0$+3  ○ ○ ◉ ◉ ○ ○ ◉ ◉ ○ ○ ◉ ◉ ○ ○ ◉

315

313

◉ + √e       ○ - √e

Préambule
2ème
couronne 32

Fig. 3

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2765757

- FR 2733869

**Littérature non-brevet citée dans la description**

- Broadband Radio Access Networks (BRAN) ; HIPERLAN Type 2 Technical Spécification ; Physical (PHY) layer. *Réseaux d'accès radio à large bande ; Spécification technique pour HIPERLAN Type 2 ; Couche physique,* Octobre 1999